# EUROPEAN PATENT SPECIFICATION

(11) **EP 4 313 686 B1**
(45) Date of publication and mention of the grant of the patent: **24.09.2025**
(21) Application number: 22718115.3
(22) Date of filing: 23.03.2022
(51) Int. Cl.: B60R 1/06

(54) **3 PIECE BASE COVER, REAR VIEW DEVICE, VEHICLE AND ASSEMBLING AND DIS-ASSEMBLING METHOD**
3-TEILIGE BASISABDECKUNG, RÜCKBLICKVORRICHTUNG, FAHRZEUG UND VERFAHREN ZUR MONTAGE UND DEMONTAGE
COUVERCLE DE BASE EN 3 PARTIES, DISPOSITIF DE VISION ARRIÈRE, VÉHICULE ET MÉTHODE DE MONTAGE ET DE DÉMONTAGE

(30) Priority: 25.03.2021 DE 102021107597; 25.02.2022 US 202217680658
(43) Date of publication of application: 07.02.2024
(60) Divisional application: 25192206.8
(73) Proprietor: Motherson Innovations Company Ltd., London EC2N 2AX (GB)
(72) Inventor: SCOTT-COLLINS, Callum, Portchester Hampshire PO 16 9SD (GB); SPYCHALA, Jakub, Portchester Hampshire PO 16 9SD (GB); CONNOR, Kane, Portchester Hampshire PO 16 9SD (GB); REHILL, Graham, Portchester Hampshire PO 16 9SD (GB); LETTIS, Andrew, Portchester Hampshire PO 16 9SD (GB); HERRMANN, Andreas, 70327 Stuttgart (DE); SCHMIERER, Arne, 70327 Stuttgart (DE); FIELD, Simon David, Lonsdale, South Australia 5160 (AU); CHARLET, Francis, 77191 Dammarie Les Lys Cedex (FR)
(74) Representative: Weber-Bruls, Dorothée
(86) International application number: PCT/EP2022/057697
(87) International publication number: WO 2022/200470

(56) References cited:
- EP-A1- 3 321 132
- EP-A1- 3 681 761
- US-A1- 2017 253 184

## Description

The present disclosure refers to a base cover of a base assembly of an exterior rear view device to be mounted to a vehicle according to the pre-amble of claim 1, a rear view device with a head assembly and a base assembly comprising such a base cover, a vehicle with such a rear view device and a method for assembling as well as dis-assembling such a rear view device.

A rear view device typically includes a base assembly to be attached to a vehicle and a head assembly to be moveable relative to the base assembly. Generally the head assembly of a rear view device can be rotated between a driving position and a parking position.

The term "rear view" may refer to a view of the surrounding area, which is not in the field of view of a driver of a vehicle, i.e. the directions opposing, left, right, below and above of the viewing direction, but can also comprise the view in the direction of the viewing direction of the driver and/or any combinations of the directions. The rear view can be achieved via at least one rear view element in form of a reflective element like a mirror and/or an image acquisition means like a camera. The rear view, that is the field of view of the driver, can be adjusted by moving, in particular rotating, the reflective element and/or the image acquisition means. This in turn can be realized by moving the complete head assembly together with the reflective element and/or the image acquisition means such that the head assembly of the rear view device can be rotated also between a plurality of viewing position.

For moving the head assembly, the reflective element and/or the image acquisition means an actuator assembly is comprised by the rear view device, which can be controlled by a first control unit within the vehicle. Also the image acquisition means can be controlled via a second control unit, wherein both control units may be formed together. However, for the purpose of controlling data have to be transferred between the rear view device and the control unit within the vehicle requiring a harness.

For facilitating moving the head assembly together with the reflective element and/or the image acquisition means specific pivot joint systems have been developed, see WO 2018/215599 A1, as well as specific actuator assemblies, see WO 2019/002627 A1.

The structure of the base assembly of an exterior rear view device is important as it provides means for connecting the device to a vehicle. US 2020/0001791 A1 refers to a base assembly of an exterior rear view device, comprising a base frame; and a base cover housing the base frame and formed in at least two parts connected to each other, wherein the base assembly comprises a first opening at a first end of the base assembly at which the base frame is configured to be attached to a vehicle and a second opening at a second end of the base assembly at which a head assembly of the exterior rear view device is configured to be attached to the base frame, wherein at least one of a first sealing means at the first opening is provided comprising a two-component gasket with a hard component and a soft component, the hard component comprising: at least one first connection element configured to engage at least one first connection element of a first cover part; and at least one first connection element of a second cover part configured to provide a locking connection between the first cover part and the second cover part, and/or a second sealing means at the second opening is comprising a two-component gasket with a hard component and a soft component, the hard component comprising: at least one second connection element configured to engage at least one second connection element of the first cover part; and at least one second connection element of the second cover part to provide a locking connection between the first cover part and the second cover part.

The base frame fulfills a multitude of functions, in particular that of supporting the head assembly and connecting the same as well as electronic components of the exterior rear view device to the vehicle and a central control unit within the vehicle, respectively, with the latter attachment requiring a harness to be safely guided and sealed, electrically as well as with respect to moisture. As the base frame is made of metal, often aluminum, fulfilling said functions is a challenge.

The base frame is covered by one or more pieces to achieve a pleasing appearance and to adapt the exterior rear view device to the vehicle design. Further, the cover pieces have to fulfill technical functions, like water drainage and the like.

DE 102018 116 008 A1 discloses a base assembly of an exterior rear view device, comprising a base frame; and a base cover housing the base frame and formed in at least two parts connected to each other, wherein the base assembly comprises a first opening at a first end of the base assembly at which the base frame is configured to be attached to a vehicle and a second opening at a second end of the base assembly at which a head assembly of the exterior rear view device is configured to be attached to the base frame, wherein at least one of a first sealing means at the first opening is provided comprising a two-component gasket with a hard component and a soft component, the hard component comprising: at least one first connection element configured to engage at least one first connection element of a first cover part; and at least one first connection element of a second cover part configured to provide a locking connection between the first cover part and the second cover part, and/or a second sealing means at the second opening is comprising a two-component gasket with a hard component and a soft component, the hard component comprising: at least one second connection element configured to engage at least one second connection element of the first cover part; and at least one second connection element of the second cover part to provide a locking connection between the first cover part and the second cover part.

US 2015/0224930 A1 relates to an exterior rear view mirror assembly configured for mounting at an exterior portion of a vehicle, said exterior rearview mirror assembly comprising: a mounting arm configured for attachment at an exterior portion of a vehicle equipped with said exterior rear view mirror assembly; a mirror head attached at said mounting arm; an attaching element attached at a mirror reflective element; a shroud extending from said attaching element and partially received in said mirror head; a mirror actuator operable to adjust said attaching element and said mirror reflective element relative to said mirror head, wherein said mirror actuator adjusts said mirror reflective element, said attaching element and said shroud in tandem relative to said mirror head; and wherein said mirror reflective element is disposed outside of said mirror head and said shroud spans a gap between said mirror reflective element and said mirror head to substantially encase said attaching element.

US 2017/0253184 A1 discloses a vehicle side-view mirror comprising: a mirror base, which is fixed to a vehicle body; and a mirror head, which includes a mirror surface, is attached to the mirror base to be rotatable about an axis vertically extending with respect to the mirror base, and is switchable between a folded position and an operative position, wherein a gap is formed between the mirror base and the mirror head, a sleeve, which protrudes upward, is formed on the mirror base, an opening, into which the sleeve is inserted, is formed in a bottom of the mirror head, the sleeve has an outer peripheral surface on which a first outer peripheral surface and a second outer peripheral surface, which is located further in an inward radial direction of the sleeve than the first outer peripheral surface, are formed in a circumferential direction, the second outer peripheral surface is formed so as to extend smoothly in the circumferential direction of the sleeve, and a passage, which guides wind entering the gap into the mirror head, is formed between the second outer peripheral surface and an inner peripheral surface of the opening.

US 2017/253184 A1 teaches a vehicle side-view mirror comprising a mirror base, which is fixed to a vehicle body; and a mirror head, which includes a mirror surface, is attached to the mirror base to be rotatable about an axis vertically extending with respect to the mirror base, and is switchable between a folded position and an operative position, wherein a gap is formed between the mirror base and the mirror head, a sleeve, which protrudes upward, is formed on the mirror base, an opening, into which the sleeve is inserted, is formed in a bottom of the mirror head, the sleeve has an outer peripheral surface on which a first outer peripheral surface and a second outer peripheral surface, which is located further in an inward radial direction of the sleeve than the first outer peripheral surface, are formed in a circumferential direction, the second outer peripheral surface is formed so as to extend smoothly in the circumferential direction of the sleeve, and a passage, which guides wind entering the gap into the mirror head, is formed between the second outer peripheral surface and an inner peripheral surface of the opening.

EP 3 681 761 A1 describes an external rear view device for a motor vehicle comprising a base assembly provided for arrangement on the motor vehicle; a head assembly configured to be attached to the base assembly; and rear view means comprising at least one of a camera unit and a reflective element secured within the head assembly, wherein the head assembly is configured to be detachable and is selected from a set comprising a first head assembly with a first rear view means comprising at least one reflective element, preferably in form of a mirror glass, and a second head assembly with a second rear view means comprising at least one reflective element, preferably in form of an at least partly translucent mirror glass, and a camera unit being configured to obtain a rear view image through the reflective element, and a third head assembly with a third rear view means comprising a camera unit configured to obtain a rear view image through an opening.

It is the object of the present disclosure to further develop the known base cover according to the pre-amble of claim 1 for fulfilling esthetic as well as technical functions.

This object is achieved by the features of the characterizing portion of claim 1.

Thus, according to a first aspect of the present disclosure a base cover of a base assembly of an exterior rear view device to be mounted to a vehicle and to moveably support a head assembly, comprising three cover pieces designed to releasably mantle the base frame via clip, snap and/or latch connections, in particular without screw connections, is provided. The three cover pieces comprise a base cover cap, a lower base and an upper base cover, wherein the base cover cap, the lower base cover and the upper base cover are connected by the snap, clips and/or latch connections to each other and the base frame, without screws, and the assembly of the base cover cap, the lower base cover and the upper base cover on the base frame is secured by engaging sealing means.

Embodiments of the base cover can be further defined in that the three cover pieces are made from plastic, and/or the three cover pieces isolate the base frame being made from a metal; and/or the three cover pieces cover an arm of the base frame from a door attachment portion to a head attachment portion of the base frame, and/or the three cover pieces are connected by clip, snap and/or latch connections, with said connections being provided between the three cover pieces, sealing means and the base frame to provide the base assembly.

Other embodiments characterized in that the lower base cover is provided with an opening for a camera attached to the base frame, in particular via a camera cradle, and/or a drain hole, and/or the lower base cover is provided with one or more first attachment means, in particular five clips and a multi-functional assembly projection, for attachment to the base frame; and/or the lower base cover is provided with one or more second attachment means, in particular comprising three hooks, for attachment to the sealing means, in particular a door gasket substrate of the sealing means; and/or the lower base cover has an edge to engage the sealing means, in particular a door seal gasket of the sealing means and/or for an outer sealing; and/or the lower base cover is provided with one or more third attachment means for attachment to the base cover cap, in particular comprising the multi-functional assembly projection and openings, and/or the lower base cover is provided with one or more fourth attachment means for attachment to the upper base cover, in particular comprising a pocket and openings.

Further, the base cover cap may be provided with an opening for a camera attached to the base frame, in particular via a camera cradle; and/or the base cover cap may be provided with one or more fifth attachment means for attachment to the lower base cover, in particular comprising peg like projections and a tab; and/or the base cover cap may be provided with one or more sixth attachment means for attachment to the upper base cover, in particular comprising peg like projections, a slot and two clips, preferably in form of two leaf spring clips adapted to rest on the base frame at the root and end, allowing the middle portion there between to flex downwards; and/or the base cover cap is provided with one or more seventh attachment means for attachment to the base frame, in particular comprising at least one clip.

Still further, embodiments may be defined in that the upper base cover is provided with an opening for a camera attached to the base frame, in particular via a camera cradle; and/or the upper base cover is provided with one or more eighth attachment means for attachment to the lower base cover, in particular comprising location pegs and/or at least one clip; the base cover cap is provided with one or more ninth attachment means for attachment to with the base cover cap, in particular comprising clip retention extensions and at least one alignment projection, and/or the upper base cover is provided with one or more tenth attachment means, in particular a hoop clip, for engagement with the sealing element, in particular a projection of the door gasket substrate.

Embodiments may also be characterized by a glare shield surrounding a lens of a camera, in particular the lens extending through the opening of the base cover cap, and providing an opening through which the camera can obtain images, wherein preferably the glare shield is configured to be releaseably attached to at least one of the three cover pieces and/or a camera cradle of the camera via at least one the via clip, snap and/or latch connection.

It may be that the glare shield is provided with at least one clip, wherein preferably the at least one clip of the glare shield is configured to at least one of engaging the base cover cap or at least one extension or lug of the base cover cap and being supported by the camera cradle or at last one retention tab of the camera cradle.

According to a second aspect of the present disclosure, an exterior rear view device is provided, which comprises a base assembly with a base frame to be attached to a vehicle, a head assembly for supporting at least one reflective element, display element and/or camera, with the head assembly being attached to the base assembly in a moveable manner, and a sealing means adapted to be installed between the base assembly and a door of the vehicle, wherein the base frame is mantled with a base cover according to the present disclosure.

Said exterior rear view device may further comprise at least one camera, preferably positioned in a non-moving area of the moveable head assembly or in the base assembly, in particular attached to the base frame and/or viewing through an opening provided by one of three cover pieces, and/or a camera cradle which is configured to be attached to the base frame, in particular by a friction fit and without any separable attachment element, with the camera cradle preferably being a plastic unit for isolating the camera from the base frame; and/or a retainer means between the base frame and the sealing means, with the retainer means preferably being a plastic unit for sealing and guiding harness.

According to embodiments the exterior rear view device may comprise an articulation assembly for moving the head assembly relative to the base assembly, and/or at least one functional device, comprising a light module, a turn signal indicator module, a blind spot indicator module, or a human machine interface, a Bluetooth module, a sensor module, a temperature sensor, a touch sensor or a contamination sensor, and a cleaning device for cleaning the lens, in particular comprising at least one fluid port or nozzle, and/or a control unit, in particular adapted for controlling at least one of the display element, the articulation assembly and the functional device.

It may be that the display element is configured to be at least one of viewable through the reflective element when activated and activated by at least a driver of the vehicle, depending on an output signal of the sensor module, via a vehicle control system and/or via the control unit.

According to a third aspect of the present disclosure a vehicle with the door having a door panel and supporting a window as well as a cheater channel sealed by glass run seal and the exterior rear view device of the present disclosure is provided, wherein the door panel also supports the exterior rear view device.

It is proposed that the glass run seal is arranged within a channel provided by the base frame with the retainer means and the sealing means; and/or a lip of the glass run seal engages the cheater panel and the upper base cover; and/or the glass run seal is at least partly covered by a waist finisher such that the base assembly extends from the waist finisher.

According to a fourth aspect of the present disclosure the same provides a method for assembling the base cover of the present disclosure, which comprise the following steps: comprising the following steps attaching the lower base cover to the sealing means and the base frame, wherein preferably an edge of the lower base cover is brought into engagement with the door gasket seal such that the lower base cover can be rotated until it connects with the base frame and its opening is arranged to allow the camera to view out of the cover, with in particular the hooks the lower base cover being rotated into hook pockets and/or between ribs provided by the door gasket substrate.

Further, it may be that the assembling method may comprise the following step: attaching the base cover cap to the lower base cover, wherein preferably the base cover cap is attached at one end to the lower base cover for creating a rotation point to rotate the base cover cap into its final position with attachment also at its other end, with in particular the tab at the end of the base cover cap, which faces the door attachment portion of the base frame, being entered into the opening of the lower base cover for defining the attachment direction and locks in behind the lower base cover for creating a rotation point, and/or with in particular the base cover cap being forced to flex outboard while being rotated into its final position, and/or with in particular the peg type projection at the end of the base cover cap, which faces the head attachment portion of the base frame, being entered into a first slot in the multi-functional assembly projection of the lower base cover and another peg type projection of the base cover cap being entered into another slot in the multi-functional assembly projection of the lower base cover as well as flexes back into the opening of the lower base cover for controlling the final fit of the base cover cap.

Still further, said assembling method may comprise the following steps: attaching the upper base cover to the base cover cap and the lower base cover, wherein preferably the attachment of the upper base cover is assisted by the base cover cap being assembled to the base frame by providing a ramp guiding a rotational movement of the upper base cover with in particular the upper base cover being attached at one end to the lower base cover and the base cover cap for creating a rotation point to rotate upper base cover into its final position with attachment also at its other end, and/or with in particular the two location pegs at the end of the upper base cover, which faces the head attachment portion of the base frame, being fitted into two corresponding slots, one being provided by the opening in lower base cover and the other by the slot being formed in the projection of the base cover cap, and/or with in particular the outermost location peg pulling the base cover cap into its final position and defining a rotation axis; and/or with in particular rotating the upper base cover until the four location projections position the upper base cover on the lower base cover, and/or with in particular the ramp is provided by the two clips next to the end of the upper base cover, which faces the head attachment portion of the base frame, by said two clips resting on the base frame at their roots and ends, allowing the middle portions to flex downwards, and/or with in particular the projections align the upper base cover and lead the clip retention extensions onto the corresponding clips of the base cover cap, and/or with in particular the clip at the end of the upper base cover, which faces the door attachment portion of the base frame, being entered into the pocket in the lower base cover, and/or with in particular the hoop clip at the end of the upper base cover, which faces the door attachment portion of the base frame, engaging with the projection of the door gasket substrate.

According to an embodiment, the following step may be comprised: connecting the glare shield for the camera, preferably by pushing the same between the base cover cap and the cradle of said camera, with in particular pushing the at least one clip in engagement with the at least one extension or lug of the base cover cap and the at last one retention tab of the camera cradle, and/or with in particular the connecting step of the glare shield being the last step of assembling the base cover.

According to a fifth aspect of the present disclosure the same provides a method for dis-assembling the base cover of the present disclosure, after assembling the base cover with a method of the present disclosure, wherein the base cover cap, the lower base cover and the upper base cover are dis-mantled with a single tool by dis-lodging the snap, clips and/or latch connections and/or with the base frame being mounted to the vehicle.

The dis-assembling method can be further defined in that the tool is a metal piece, preferably made out of aluminum, and/or the tool has a maximum diameter of 4 mm, preferably is in form of a cylinder or pin; and/or the tool locks the mirror head assembly in a knock forward position to gain access to a camera connector and/or the camera when the base cover cap, the lower base cover and the upper base cover have been dis-mantled from the base frame; and/or the tool dis-engages at least one of the snap, clips and/or latch connections.

In addition, said dis-assembling method may comprise the following steps, when the base cover has been assembled with the method of the present disclosure: accessing the hoop clip of the upper base cover through a slot in door panel to loosen the engagement with the projection of the door gasket substrate, and/or passing through the drain hole of the lower base cover to loosen the engagement of the clip of the upper base cover with the pocket of the lower base cover, and/or removing the upper base cover by pulling its clip retention extensions out of the two clips of the base cover cap, and/or dis-mounting the base cover cap by dis-engaging its clip from the location projection of the base frame, preferably by using the tool, and its peg projections from the multi-functional assembly projection of the lower base cover, preferably by pushing them out of position, such that the base cover cap can rotate out, and/or dis-engaging the five clips of the lower base cover from the base frame such that the lower base cover can be removed.

The dis-assembling method can also comprise the following step: locking the mirror head assembly in the knock forward position by inserting the tool into a recess or hole of the base frame to access a mechanical stop of a case frame of the head assembly from the bottom of the base assembly; wherein preferably all parts the tool interfaces with are made from aluminum.

According to an embodiment, the following step may be comprised: the glare shield is dis-mantled, preferably with the tool, by dis-lodging the snap, clips and/or latch connections, with in particular the dis-mantling of the glare shield being the first dis-mantling step.

The foregoing summary, as well as the following detailed description, will be better understood when read in conjunction with the appended drawings. For the purpose of illustration, certain examples of the present disclosure are shown in the drawings. It should be understood, however, that the present disclosure is not limited to the precise arrangements and instrumentalities shown. The accompanying drawings, which are incorporated in and constitute a part of this specification, illustrate an implementation of system, apparatuses, and methods consistent with the present disclosure and, together with the detailed description, serve to explain advantages and principles consistent with the present disclosure, wherein:
- Figure 1a: is a perspective view of a lower base cover of a base assembly of a first exterior rear view device of the present disclosure;
- Figure 1b: is a perspective view of a base frame to which the lower base cover of figure 1a is to be attached;
- Figure 1c: is a perspective view of a sealing means, to be attached to both the lower base cover of figure 1a and the base frame of figure 1b;
- Figure 1d: is a part view of the sealing means of figure 1c;
- Figure 1e: is a perspective part view of a connection between the sealing means of figure 1c with the base frame of figure 1b;
- Figure 1f: is a perspective part view of a connection of the lower base cover of figure 1a to the sealing means of figure 1c;
- Figure 2a: is a perspective view of a part of the base frame of figure 1b as well as a retainer means of a retainer assembly to be interposed between the base assembly and a vehicle (not shown);
- Figure 2b: is a perspective view of the retainer means of figure 2a attached to the base frame of figure 2a;
- Figure 2c: is a cross-section of the retainer means and the base frame of figure 2b along line A-A;
- Figure 2d: is a perspective view of the lower end of the base frame in figure 2a from the opposite side compared to figure 2a;
- Figure 2e: is a perspective view of the lower end of the base frame in figure 2a from the same side as figure 2a;
- Figure 3a: is a perspective view of a part of the base frame of figure 2a;
- Figure 3b: is a perspective view of the retainer means of figure 2a;
- Figure 3c: is a perspective view of retainer means of figure 3b attached to the base frame of figure 3a;
- Figure 3d: is a perspective view on the retainer means and the base frame attached to a vehicle, from the side of a door panel;
- Figures 4a to 4f: are perspective views demonstrating the assembly of the base frame with the retainer means firstly to a lower case of a head assembly of an exterior rear view device of the present disclosure and secondly to the sealing means of figure 1c;
- Figures 5a to 5c: are perspective views demonstrating attachment features of the sealing means of figure 1c;
- Figures 6a to 6c: are perspective views demonstrating the attachment of the lower base cover of figure 1a to the base frame shown in figure 1b to which in particular the retainer assembly of figure 5a is attached;
- Figure 6d: is another view of the sub-assembly of figure 6c, attached to the door;
- Figure 6e: is a cross-section taken along the line A-A of figure 6d;
- Figure 7a: is a top view on the sub-assembly of figure 6c;
- Figure 7b: is a cross-section of the sub-assembly of figure 7a taken along the line A-A;
- Figure 7c: is a cross-section of the sub-assembly of figure 7a taken along the line B-B;
- Figure 8a: is a perspective view of a camera cradle assembled in the base frame of figure 1b;
- Figure 8b: is a cross-sectional view of the camera cradle as assembled in the base frame along the cross sectional line A-A shown in figure 8a;
- Figure 8c: is a perspective view of the camera cradle of figures 8a and 8b;
- Figure 9a: is a perspective view of the sub-assembly of figure 7a attached to the vehicle;
- Figure 9b: is a perspective view of an exterior rear view device of the present disclosure and attached to a vehicle of the present disclosure;
- Figures 10a and 10b: are perspective views demonstrating the assembly of a base cover cap to the sub-assembly shown in figure 7a;
- Figures 11a to 11e: are perspective part views of the lower base cover of figure 1a, the base cover cap shown in figures 10a and 10b and an upper base cover, demonstrating the attachment of those 3 cover pieces to each other;
- Figures 12a to 12f: are perspective views demonstrating the assembly of a glass run seal, a cheater panel, the base frame, an base cap and the upper base cover with respect to the door panel and a window;
- Figure 13a: is a perspective view of the upper base cover of figure 12e; and
- Figures 13b to 13i: are perspective views demonstrating the attachment of the upper base cover of figure 13a with the lower base cover of figure 1a as well as the base cover cap of figures 10a and 10b;
- Figure 14a: is a perspective view of the base assembly, without the upper base cover;
- Figure 14b: is a perspective view demonstrating the attachment of the upper base cover, without the base frame;
- Figure 14c: is a cross-sectional view along the line A-A of figure 14a, with attached upper base cover;
- Figures 15a to 15f: are perspective views demonstrating the dis-assembly of the 3 cover pieces for the camera repair;
- Figures 16a to 16l: are perspective views demonstrating details of the dis-assembly of all 3 cover pieces;
- Figures 17a to 17c: are perspective views demonstrating locking the head assembly during dis-assembly of the camera as shown in figures 15d and 15f;
- Figure 18a: is a perspective view of a second exterior rear view device of the present disclosure, for carrying a mirror glass, which is at least partly translucent, and a display, and having a further camera arranged within the base assembly;
- Figure 18b: is a cross-sectional view of the rear view device of figure 18a;
- Figure 18c: is a perspective view of the external end of the base assembly of the rear view device of figure 18a, prior to attachment of a glare shield;
- Figure 18d: is a perspective view of the external end of the base assembly of the rear view device of figure 18a, with the attached glare shield;
- Figure 18e: is a cross-sectional view along the line AA shown in figure 18d; and
- Figure 19: is a perspective view of a base assembly of a third second exterior rear view device of the present disclosure.

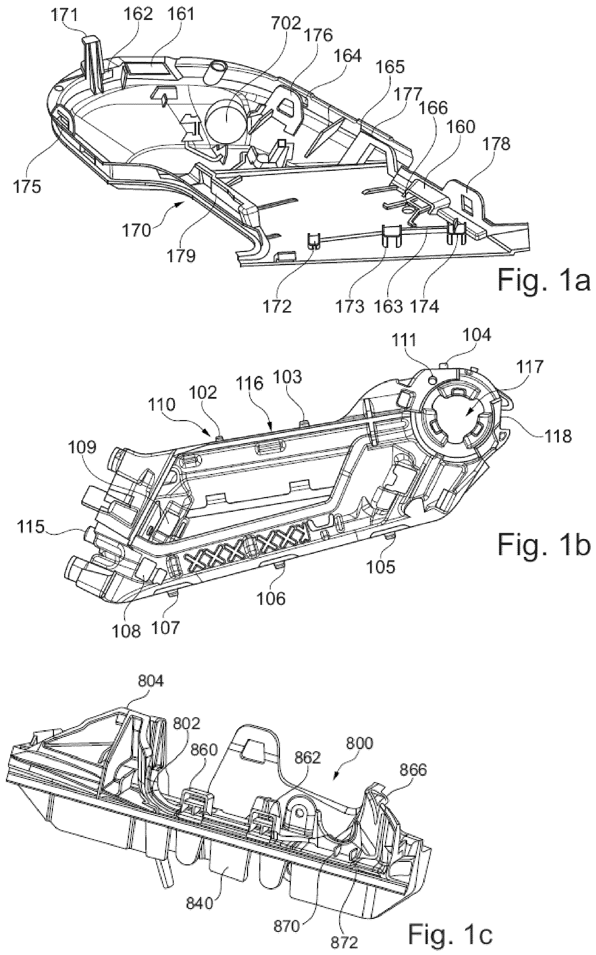

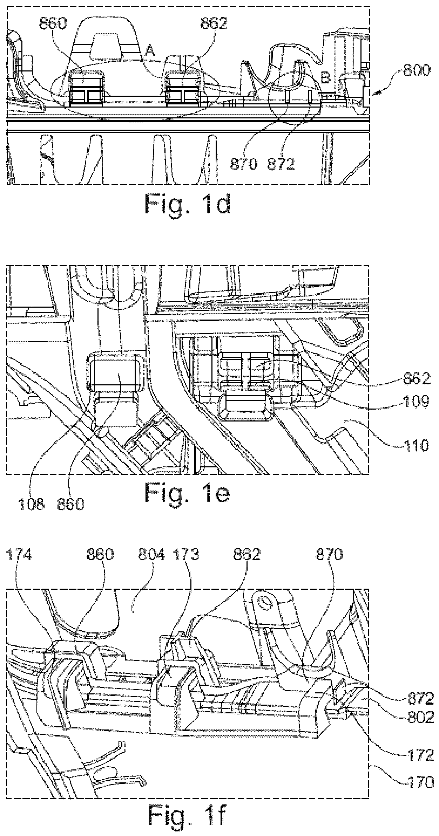

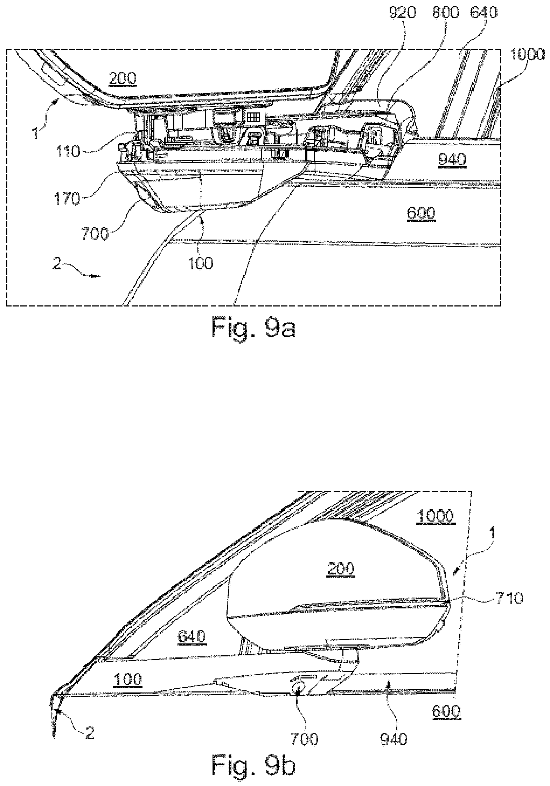

Figures 1a to 1f show a base cover lower or lower base cover 170 and a base frame 110 of a base assembly 100 of a first exterior rear view device 1 of the present disclosure, The exterior rear view device 1 is adapted to be mounted to a vehicle 2 as shown in particular in figure 9b. Further, figures 1c and 1d show a sealing means 800. The sealing means 800 is to be attached to both, the lower base cover 170 and the base frame 110 and to be arranged between the base assembly 100 and the vehicle 2. Before describing the attachment of the lower base cover 170, the base frame 110 and sealing means 800 to each other, the structural features of each one of these three elements is described.

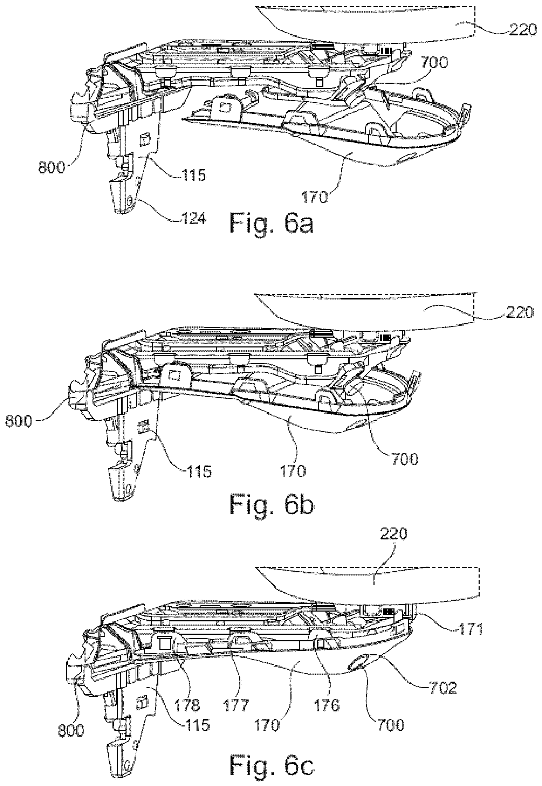

The lower base cover 170 of figure 1a is a single plastic piece with a multi-functional assembly projection 171, several hooks 172 to 174, several clips 175 to 179, a pocket 160, several openings 161, 162, 164 and 165 and a wall 163. Further, the lower base cover 170 provides an opening 702 for a camera 700, see figure 6b, and a drain hole 166.

The base frame 110 of figure 1b is provided in form of an aluminum unit with a plurality of clips 102 to 107 and three hook apertures 108, 109 and 118. The unit can be divided into three portions, i.e. a door attachment portion 115, an arm 116 and a head attachment portion 117, with the door attachment portion 115 running substantially parallelly to a door 600 of the vehicle 1 shown in figures 9a and 9b, whereas the arm 116 extends substantially perpendicularly away from the door attachment portion 115 and the head attachment portion 117 is provided at the end of the arm 116 opposite the one merging with the door attachment portion 115. In the head attachment portion 117 a hole 111 for a tool (not shown) used when dis-assembling cover pieces of the base frame 110. But first, the assembly of said cover pieces is described.

The sealing means 800 of figure 1c is provided in form of a 2K door gasket with a door gasket seal 802 and a door gasket substrate 804. The door gasket substrate 804 is formed with several clips 840 (only one being shown in figure 1c), two hook pockets 860 and 862, two location ribs 870 and 872 and one attachment projection 866 discussed in detail below.

Figures 1d and 1e demonstrate the attachment of the lower base cover 170 of figure 1a, being one of three cover pieces of the base frame 110, to the base frame 110 shown in figure 1b. The combination of the base frame 110, the sealing means 800 and the lower base cover 170 is shown in figure 1f providing a locking system without the need of screws and accommodating a location as well as assembly method.

The lower base cover assembly method allows a secure mounting of the components without using screws, as
- the lower base cover 170 is provided with the three hooks 172 to 174, the five clips 175 to 179 and the multi-functional assembly projection 171,
- the base frame 110 is provided with the two hook apertures 108 and 109, the 5 clips 103 to 107 and a recess or an aperture 118 for the multi-functional assembly projection 171, and
- the sealing means 800 is provided with the two hook pockets 860 and 862 and two hook ribs 870 and 871.

In detail, the hook pockets 860 and 862, provided by the door gasket substrate 804 and shown in region A in figure 1d, are door gasket location features with multiple functions. They provide location and positional control whilst assembling the sealing means 800 to the base frame 110, with the hook pockets 860 and 862 of the sealing means 800 passing through the hook apertures 108 and 109 of the base frame 110 as soon as the sealing means 800 is attached to the base frame 110, see figure 1e. Along with the two ribs 870 and 872, shown in region B in figure 1d, the hook pockets 860 and 862 are used to assemble the lower base cover 170. As shown in figure 1f, the hooks 173 and 174 of the lower base cover 170 are engaged within the hook pockets 860 and 862 of the sealing means 800. Further the third hook 172 of the lower base cover 170 is located between the two ribs 870 and 872 of the sealing means 800. Thus, the hook pockets 860 and 862 and the ribs 870 and 872 of the sealing means 800 lock and locate the door gasket seal in all X + Y + Z directions. Critically the Z direction is locked which allows an accurate positional location for the sealing strategy.

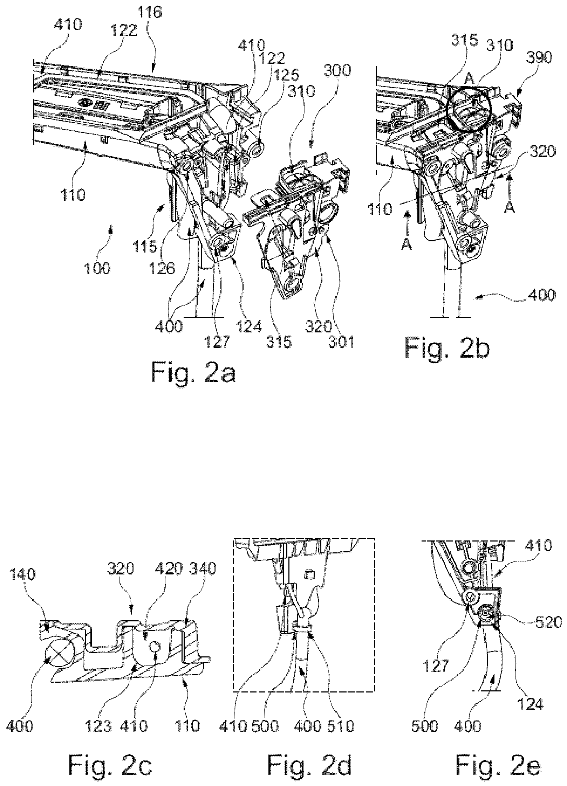

Before further describing said sealing strategy, the assembly of the base frame 110 with a retainer means 301 and to a door panel 605 is described with reference to figures 2a to 3d.

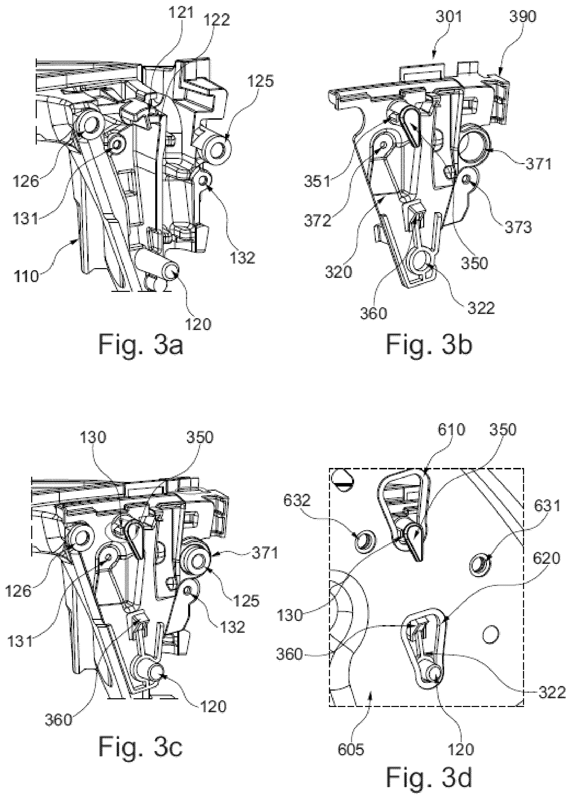

The retainer means 301, best seen in figures 2b and 3b, may be manufactured from a plastic material and it provides a retainer assembly 300, together with the sealing means 800, to be arranged between the base frame 110 of the base assembly 100 of the exterior rear view device 1 and the door panel 605 of the door 600 of the vehicle 2.

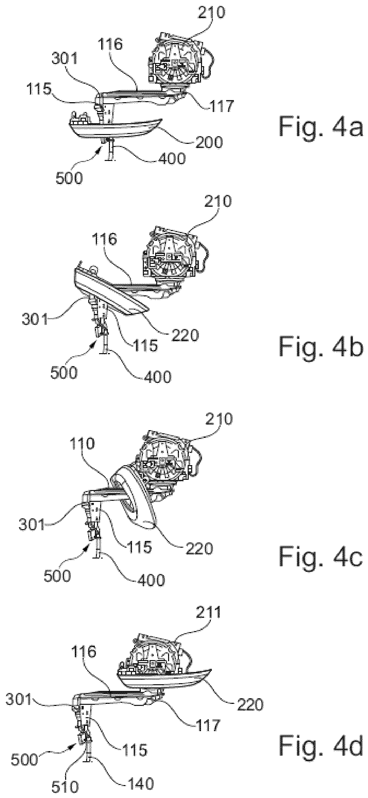

The figures 2a to 2e also show a harness 400 for electrically connecting in particular a power source and a control unit within the vehicle (not shown) with electric components of the exterior rear view device. Such electric components may comprise, as e.g. shown in figures 4a to 4f, an actuator assembly 210 suitable for moving a head assembly 200 together with a reflective element (not shown) relative to the base frame 110 supporting the head assembly 200, and a camera 700 as well as an indicator means like a turn signal indicator 710 shown in particular in figure 9b. Said harness 400 may comprise a camera harness 410.

The retainer means 301 is a multi-function component. The different functions will be described with respect to the other components of the exterior rear view device 1 as well as the vehicle 2 in the following.

An important function of the retainer means 301 is harness sealing, managing harness routing and accommodating variation in the camera harness 410 and cleaning systems (not shown), as described in the following.

The door attachment portion 115 of the base frame 110 is provided with an opening 124 for a harness holder 500 at its lower, free end, as best seen in figures 2d and 2e. Said harness holder 500 is formed with a fixing tie 510 for holding the harness 400 and a clip 520 for connecting the holder 500 to said door attachment portion 115 by passing through the opening 124.

The base frame harness locator opening feature governs harness position length the door side and the rear view device side, and provides a strong retention eliminating risk of the harness 400 being misplaced e.g. by being pulled through during handling. Further, the locating feature leads to reduced tolerance of fit-to-door. In other words, the harness 400 is firmly located to the base frame 110 in all directions allowing a solid datum strategy for harness lengths and provides the ability to hold as well as transport the exterior rear view device 1 whilst holding on to the harness 400.

The harness 400 as well as the camera harness 410 divided therefrom above the harness holder 500 extend between the door attachment portion 115 of the base frame 110 and a holding portion 320 of the retainer means 301 to an upper end of the door attachment portion 115, which turns into the arm 116 of the base frame 110.

The retainer means 301 is provided with guiding means for guiding the camera harness 410 to a sealing portion 310 of the retainer means 301 extending substantially perpendicularly to the holding portion 320 to cover the camera harness 410 at its bending region at the transition between the door attachment portion 115 and the arm 116, see region A in figure 2b.

While the base frame 110 is provided with a harness guiding channel portion 140 for guiding the harness 400 and a camera harness guiding channel portion 123 for guiding the camera harness 410, the holding portion 320 of the retainer means 301 also provides a camera harness guiding channel portion 340 to substantially close a channel 420 for the camera harness 410, as shown in figure 2c.

As the retainer means 301 is not metallic, the sealing of the harness 400, together with the camera harness 410, as well as the attachment of the metallic base frame 110 to the door panel 605 becomes safer. The design of the retainer means 301 allows to accommodate different sets of harness and cleaning system for all variations of mirror trim level. Further, the retainer means 301 ensures an easy assembly to seal in particular the camera harness 410 after being mounted and to manage its routing along the base frame door attachment portion 115, without departing from the commonly used datum system between the base frame 110 and the door panel 605.

The base frame 110 is provided with a location pin 120 as well as a T shaped location projection 121 belonging to the datum system ensuring a correct assembly of the components of the exterior rear view device 1 and a correct attachment of the exterior rear view device 1 to the vehicle 2. The location pin 120 and the T shaped location projection 121 extend substantially perpendicularly to the plane of the door panel 605, as can be best seen in figures 3a and 3d. The retainer means 301 is provided with an opening 322 for the location pin 120 and a hook 350 with openings 351 for the arms of T shaped location projection 121, as can be best seen in figure 3b. Figure 3d illustrates that the location pin 120 as well as the T shaped location projection 121 pass through the respective openings 322, 351 of the retainer means 301 to also pass respective openings 610, 620 within the door panel 605 to engage the same, with the hook 350 of the retainer means 301 ensuring the respective engagement.

The base frame T shaped location projection 121 and the location pin 120 provide the primary and secondary datum strategy to the door datum system in X + Z directions, while the Y direction is controlled by using screws. The door panel 605 in figure 3d shows two screw openings 631 and 632 aligned to two screw openings 131 and 132 of the base frame 110, respectively, which in turn pass openings 371 and 372 of the retainer means 301.

Thus, the corresponding locating features of the base frame 110 and the retainer means 301 allow the base frame datum features to interface with the door 600 minimizing tolerance of datum strategy.

Further location projections 125 and 126 are provided by the door attachment portion 115.

The retainer means 301 along with the location pin 120 and the T shaped location projection 121 not only provides an accurate assembly to the door panel datum system, but also facilitates the assembly as it provides a robust 3rd hand clip/hanger function.

The retainer means 301 provides a first clip 315, which serves the attachment to the base frame 110 as best seen in figures 2a and 2b. The hook 350 primarily serves to hold the exterior rear view device 1 in Y direction to assist assembly of the screws (not shown), while the second clip 360 is on secondary location keyway to highlight when the exterior rear view device 1 is in its final assembly Z position, as best seen in figure 3d.

Next, the assembly of the base frame 110 and the retainer means 301 with a case lower or lower case 220 of the head assembly 200 of the exterior rear view device 1 and the sealing means 800 is described with reference to figures 4a to 4f.

The slim design of the base frame 110 allows the lower case 220 of the head assembly 200 to be assembled over the door attachment portion 115 and the arm 116 of the base frame 110 to reach the region of the head assembly 200 with the actuator assembly 210, as shown in figures 4a to 4d. In this respect it is to be noted that it is critical to assemble high gloss components like the lower case 220 late in the assembly sequence to minimize risk of damage. For that purpose the lower case 220 is provided with an opening 222, preferably being substantially circular, through which the base frame 110 together with the retainer means 301 can pass.

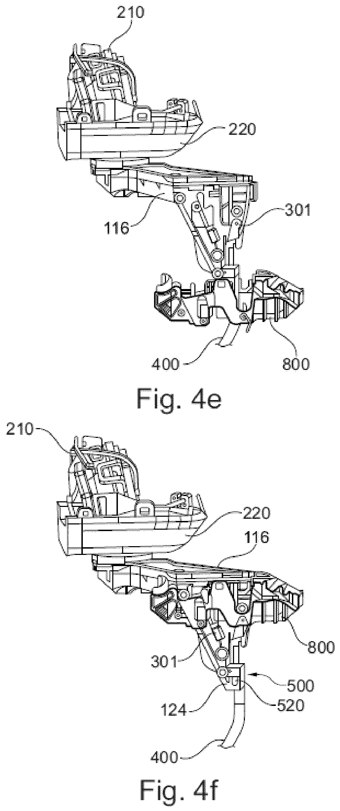

The sealing means 800 is mounted after the lower case 220, as shown in figures 4e and 4f. The sealing means location strategy is critical as it dictates the datum strategy for the corresponding base cover components.

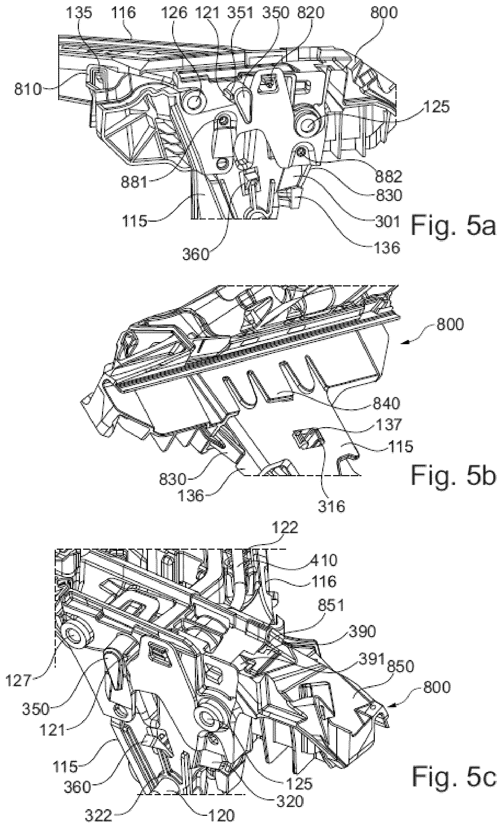

As already mentioned above, the smaller base frame geometry and the provision of a separate 2K door gasket provided by the sealing means 800 permit the lower case 220 to be assembled over the base frame 110. In the following the attachment of the sealing means 800 to the base frame 110 with the retainer means 301 is described with reference to figures 5a to 5c.

Clips 810, 830 and 840 as well as clip opening 820 allow to attach the sealing means 800 to the base frame 110 which is provided with complementary steps 135 and 136 and openings 137 and 138. The base frame 110 also is provided with the location projections 125 to 126, with two of said location projections 125 and 125 extending through the retainer means 301 as well as the sealing means 800 attached on top of the retainer means 301, see figure 5a.

Figure 5b also shows a clip 316 of the retainer means 301 engaging a respective opening 137 provided by the base frame 110.

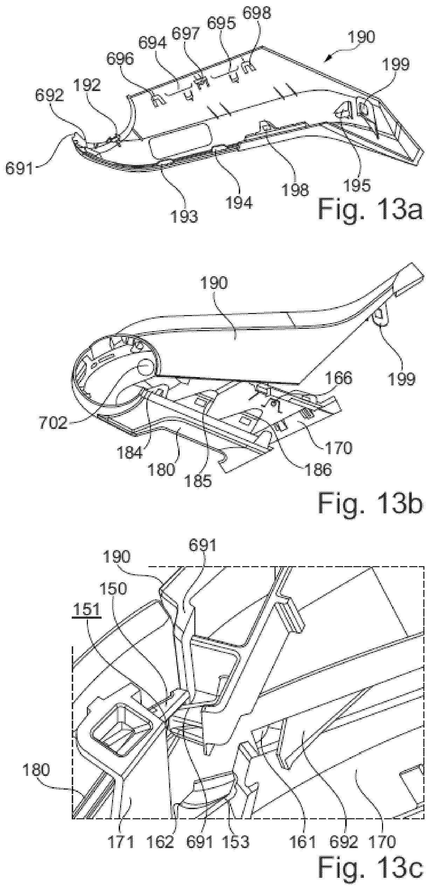

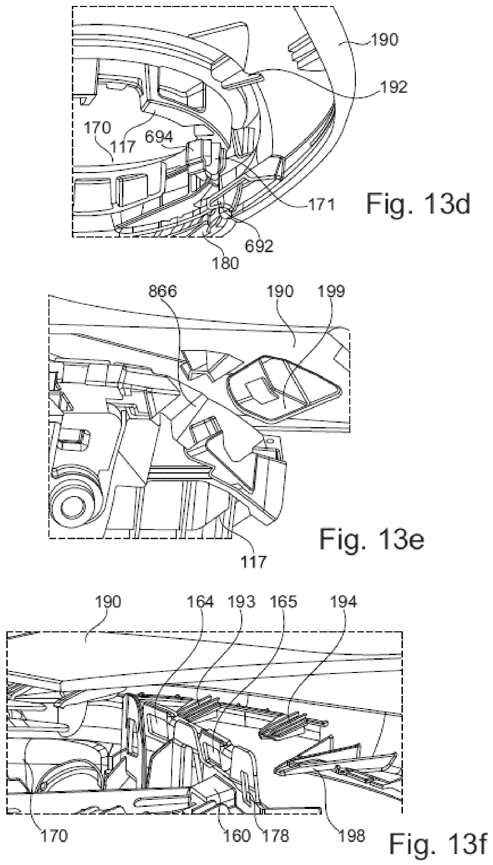

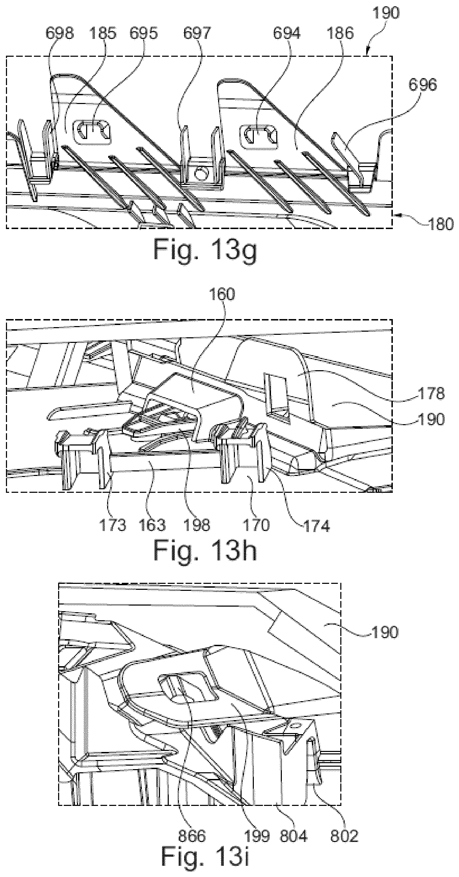

The sealing means 800 provides a datum area 850 for an upper base cover 190 as described with respect to figure 13i, with T-slots 391, 851 built into both the retainer means 301 and the sealing means 800, see figure 5c, to maximize and gain strength from the base frame into the area for upper base cover assembly.

Two screw positions determined by two screw openings 881 and 882 in the sealing means 800, best seen in figure 5a, and the two screw openings 131 and 132 of the base frame 110 shown in figure 3a, allow to secure the sealing means 800 together with the retainer means 301 to the base frame 110. These are package protections only if more strength is required.

The assembly process of the lower base cover 170 to the sub-assembly of figure 4f is designed in such a way that the camera hole 702 in the lower base cover 170 avoids scratching or fowling the camera lens whilst rotating into final assembled condition, by first approaching the the lower base cover 170 to the base frame 110 (figure 6a), then attaching the lower base cover 170 to the base frame 110 at the door attachments portion 115 (figure 6b), and finally rotating the lower base cover 170 on the arm 116 (figure 6c).

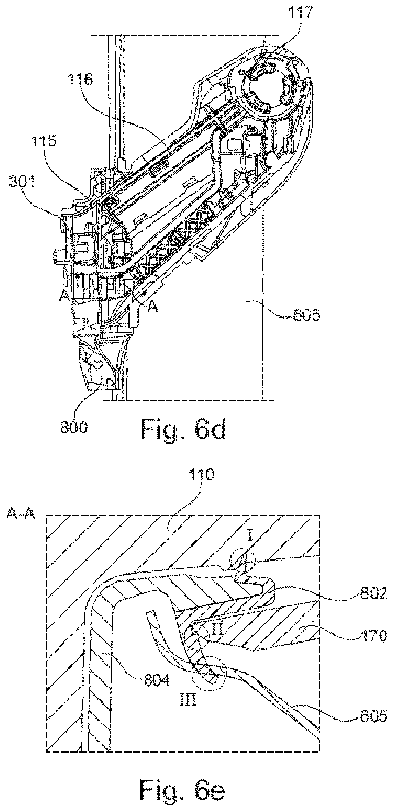

The sub-assembly of the base frame 110, the retainer means 301, the sealing means 800 and the lower base cover 170 is shown in figure 6d, attached to the door panel 605. Figure 6e shows a cross-section taken along the line A-A in figure 6d. From figure 6e the functions of the sealing means 800 as a 2K door gasket, including an integrated 2-way simultaneous sealing function as well as providing datum, location and positional controls for matching the lower base cover 170, can be best seen.

In detail, the 2-way simultaneous sealing is achieved due to the more or less S shape cross-sectional geometry of the door gasket seal 802, which may be a rubber part formed together with the door gasket substrate 802, to allow sealing in three areas with only one cavity in a 2K tool. The three sealing areas are marked with I, II and III in figure 6d:
- sealing area I provides an inner sealing to the base frame 110,
- sealing area II provides an outer sealing to the lower base cover 170, and
- sealing area III provides an outer sealing to the door panel 605.

The sealing means geometry between the exterior rear view device 1 and vehicle door 600 provides a tolerant and accurate sealing strategy when considering the assembly direction. The tolerance between door panel 605 and door datum system may be large as sealing lip of the door gasket seal 802 of the sealing means 800 accommodates for such variations

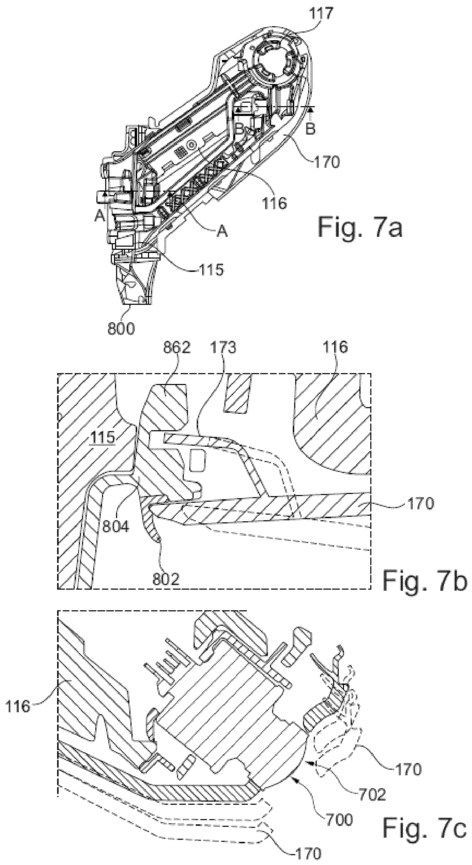

The sub-assembly shown in figure 6d is also shown in figure 7a, whereas figures 7b and 7c show details of the rotational attachment of the lower base cover 170, referred to above with respect to figures 6a to 6c:
- At the beginning, at the door attachments portion 115 in figure 7b, the edge of the lower base cover 170 engages the door gasket seal 802 such that the hook 173 can rotate into the hook pocket 862 provided by the door gasket substrate 804, and
- at the end, at the head attachments portion 117 in figure 7c, the camera hole 702 is embracing the camera 700.

The rotational attachment of the lower base cover 170 ensures that the camera, in particular its lens, remains untouched by the lower base cover 170.

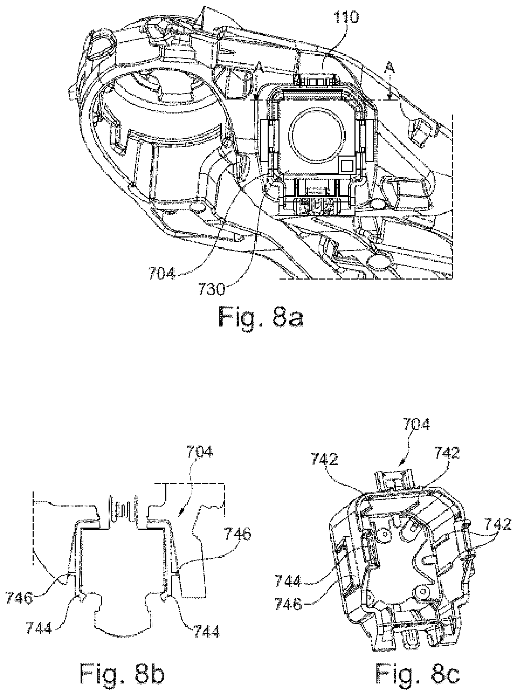

Figures 8a to 8c illustrate a camera cradle 704 for assembling in the base frame 110 for holding the camera 700 securely within the base assembly 100 of the exterior rear view device 1. Thus, the camera 700 is installed in the base frame 110 using the camera cradle 704, as shown in figure 8a. The camera cradle 704 is symmetrical along at least one axis and no screws are needed to attach the camera cradle 704 to the base frame 110. Further the body of the camera 700 is protected from contacting the metallic base frame 110 as the camera cradle 740 is made out of a plastic material in order to isolate the camera housing. The camera cradle 704 as shown in figure 8c is a one-piece element which is preferably formed by a molding process.

The camera cradle 704 include one or more location ribs 742 inside the interior surface of the cradle 704 which hold the camera 700 securely in place to provide an accurate and tuneable positioning of the camera along the X, Y, and Z axes. In the example shown in figure 8c, the location ribs 742 include six ribs formed as two pairs of ribs on three interior walls of the camera cradle 704; however, any number of ribs 742 may be used.

It can be seen in figures 8b and 8c that the camera cradle 704 also includes one or more anti-backout projections 746 and one or more clips 744. The anti-backout projections 746 are frictionally fit into the walls of the base frame 110 when the cradle 740 is inserted. When the walls of the base frame 110 push against the projections 746 and the cradle 704 is inserted, this also "locks" the clips 744 to tighten the attachment of the camera 700 to the camera cradle 704.

In the shown example, there are two anti-backout projections 746 and two clips 744 which are formed closer to a bottom edge of the cradle 704, i.e. the edge of the cradle 704 closer to the camera lens. However, any number of anti-backout projections 746 and clips 744 may be used in a variety of different positions. This ensures a tight lock of the camera 700 and stops the camera body from contacting the base frame 110.

The sub-assembly of figure 6c is also shown in figure 9a, but mounted to the vehicle 2 and with the completed head assembly 200 attached, as well as from another perspective. Figure 9a shows further details of the vehicle 2 in the region of the door 600, namely a cheater panel 640 as well as a window 1000, with a glass run seal 920 as well as a waist finisher 940. In figure 9b the final rear view device 1 attached to the vehicle 2 can be seen. Accordingly, the exterior rear view device 1 holds the glass run seal 920 in a solid position and, thereby, provides a very pleasing overall appearance suggesting that the exterior rear view device 1 extends or rather grows out of the waist finisher 940 covering a part of the glass run seal 920.

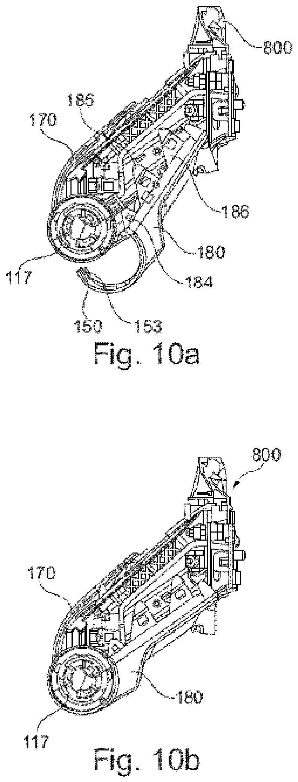

In the following it is described how to finalize the exterior rear view device 1. Next, starting from the sub-assembly of figure 7a, the assembly of a base cover cap 180, being another one of the three cover pieces of the base frame 110 and being formed with projections 150, 153 and clips 184, 185 and 186 is described with respect to figures 10a and 10b. Said assembly process of the base cover cap 180 is designed in such a way that the base cover cap 180 slides in along a ramp on the lower base cover 170 to lock in behind the base cover cap 180 creating a rotation point to rotate the base cover cap 180 into its final position.

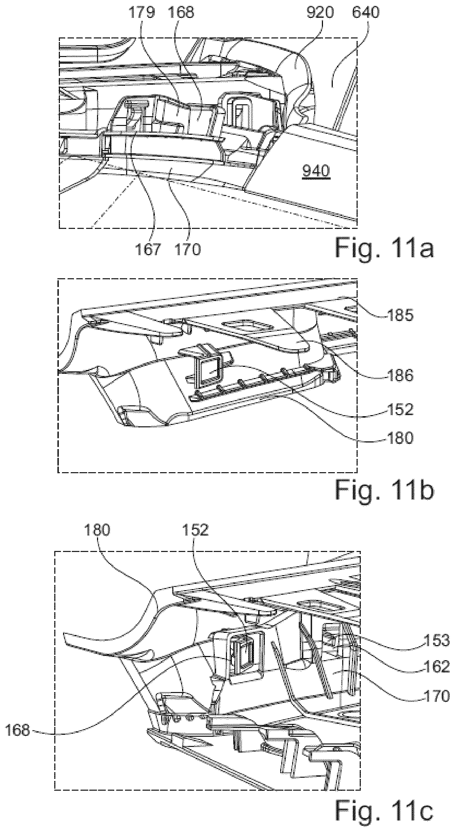

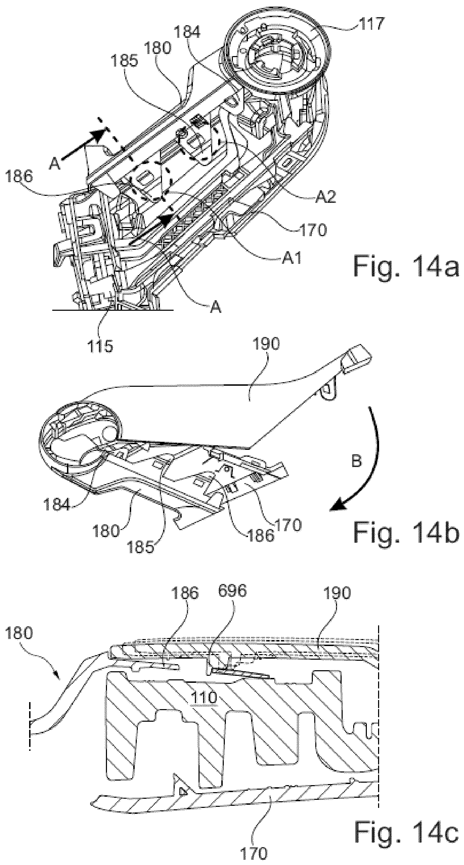

Said sliding will be discussed in further detail with respect to figure 14a to 14c. But next, in order to better understand the assembly of the base cover cap 180 as part of the base cover, figures 11a to 11e illustrate its attachment step by step, by starting in figure 11a with a part view of the sub-assembly of figure 7a attached to the door panel in order to be arranged next to the glass run seal 920, and showing attachment features of the base cover cap 180 in figure 11b. Accordingly, the base cover cap 180 is provided with a tab 152 in addition to the clips 184 to 186.

The tab 152 of the base cover cap 180 is to be entered into an opening 168 of the lower base cover 170 provided on one side of the clip 179, shown in figure 1a. Said tab 152 defines the attachment direction and locks in behind the lower base cover 170, as illustrated in figure 11c, for creating said rotation point.

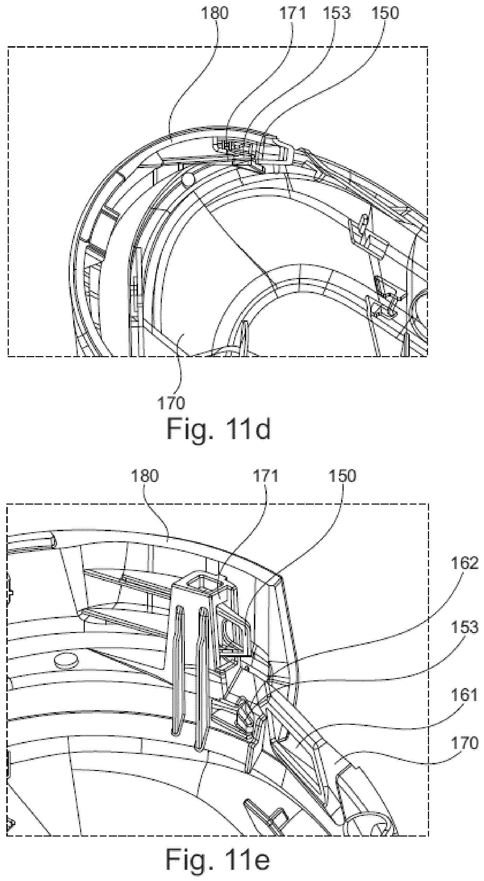

The next step is to rotate the base cover cap 180 into final position. The rotation has been created such that no surrounding parts are scratched, by the outboard area of the base cover cap 180 being forced to flex outboard while rotating, as indicated in figure 11d.

Figure 11e shows the peg type projection 150 of the base cover cap 180 entering into a slot in the multi-functional assembly projection 171 of the lower base cover 170, while the other peg type projection 153 of the base cover cap 180 enters into another slot in the multi-functional assembly projection 171 of the lower base cover 170 as well as flexing back into the opening 161 of the lower base cover 170 for controlling the final fit of the base cover cap 180.

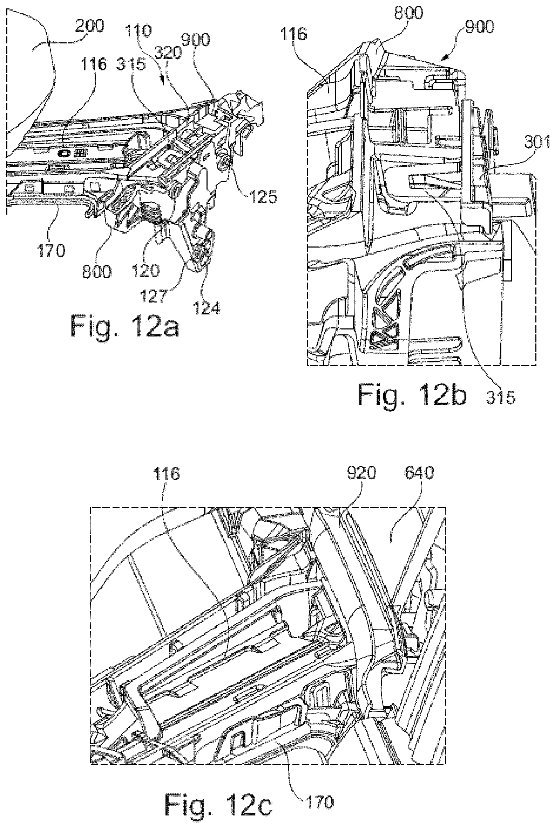

The sub-assembly of the base frame 110, the retainer means 301 and the sealing means 800 shown in figure 7a also forms a channel 900, see figures 12a and 12b, for positioning as well as locating the glass run seal 920 in particular allocated to the cheater panel 640 as shown e.g. in figure 12c.

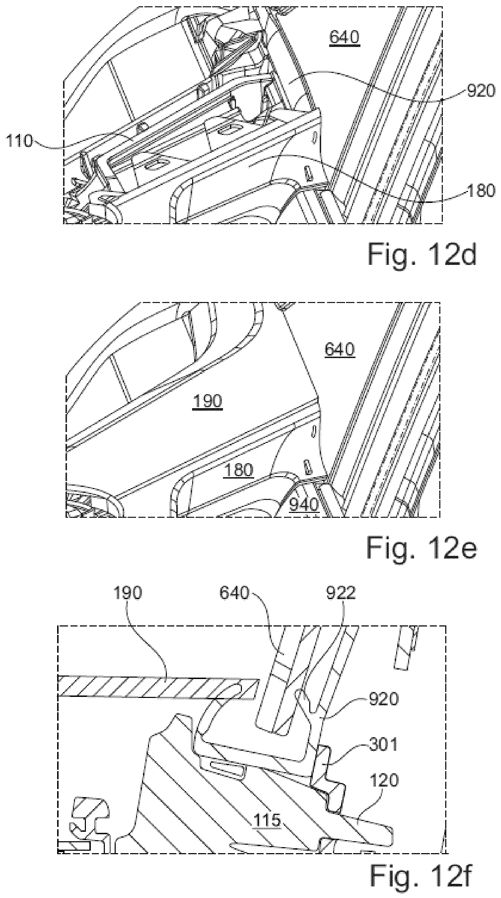

In the following the attachment of the base cover cap 180 and the base cover upper or upper base cover 190 are described with reference to figures 12d to 12f.

The combination the base frame 110, the retainer means 301 and the sealing means 800 forms the channel 900 which locates the glass run seal 920 on to the exterior rear view device 1. The glass run seal 920 runs along the cheater panel 640 and is an extension of the glass run seal running along the window 1000 and being covered by the waist finisher 940 as shown in figures 9b, 12c and 12d.

The base cover cap 180 clips to the base frame 110, see figure 12d, and also the upper base cover 190, providing the last and third cover piece of the base frame 110, is attached by clip connection, see Figure 12e. The clip connection may be located behind a chrome waist finisher (not shown) and will be described below with respect to figures 13a to 13i.

The cheater panel 640 pushes the glass run seal 920 into the correct position inside the channel 900 while being assembled. The base cover 180 and the upper base cover 190 assemble in such a way that when rotating into their position a sealing lip 922 of the glass run seal 920 is pushed against the cheater panel 640 sealing the gap between the base cover cap 180 and the upper base cover 190 on the one side and the cheater panel 640 on the other side, see figure 12f.

Figures 13a to 13i illustrate details of the attachment of the upper base cover 190 with the lower base cover 170 and the base cover cap 180 to assemble the cover of the base frame 110. For that purpose, figure 13a shows the different attachment features of the upper base cover 190 with four location projections 192 to 195, a clip 198, a hoop clip 199, two location pegs 691, 692, two clip retention extensions 694 and 695 as well as three aligns projections 696 to 698.

To assemble the upper base cover 190, the two location pegs 691 and 692 need to be fitted into two corresponding slots, one being provided by the opening 162 in lower base cover 170 and the other by a slot 151 being formed in the projection 150 of the base cover cap 180, see figure 13c. The peg 691 pulls the base cover cap 180 into the final position and defines the rotation axis for the components. Rotating the components results in engagement of the four location projections 192 to 194 and 198 to position the upper base cover 190, see figures 13d to 13f.

Three alignment features are provided by the upper base cover 190 in form of the projections 696 to 698 to align and lead two clip retention features in form of the clip retention extensions 694 and 695 onto the corresponding clips 185 and 186 of the base cover cap 180, see figure 13g.

The bottom clip 198 of the upper base cover 190 goes into the pocket 160 in the lower base cover 170 and locates the bottom parts of the components 190 and 170, as shown in figure 13h.

The last cover engagement feature is the hoop clip 199 of the upper base cover 190 which is shown in figure 13i and secures the whole assembly by engaging the projection 866 of the door gasket substrate 804.

Accordingly, the sealing means 800 plays a central role due to in particular
- including integrated two way simultaneous sealing function with three sealing areas, i.e. the sealing area I providing an inner sealing to the base frame 110, the sealing area II providing an outer sealing to the lower base cover 170, and the sealing area II providing an outer sealing to the door panel 605;
- having a geometry which permits the case lower 220 of the head assembly 200 to be assembled over the base frame 110,
- providing a datum area 850 with a T section support structure for the upper base cover 190 permitting simple clip together assembly,
- allowing a locking system, no screw assembly, of the lower base cover 170 rotating over the camera 700, and
- providing the channel 900 for the glass run seal 920 together with the base frame 110 and the retainer means 301, with said channel 900 allowing to position and locate the glass run seal 920, such that the exterior rear view device 1 holds the glass run seal 920 in a solid position and, thereby, provides a very pleasing overall appearance suggesting that the exterior rear view device 1 extends or rather grows out of the waist finisher 940 covering part of the glass run seal 920.

Figures 14a to 14c demonstrate the attachment of the upper base cover 190 assisted by the base cover cap 180 while being assembled to the base frame 110 by providing a ramp guiding the rotational movement of the upper base cover 190. The ramp is provided by the two clips 185 and 186 the base cover cap 180 which also fulfill location and clips functions, simultaneously. Said clips 185 and 186 are arranged closer to the door attachment portion 115 of the base frame 110 than the third clip 184. The two integrated leaf spring features provided by the clips 185 and 186, acting on the base frame 110, align and pre load the cover assembly.

As best seen in figure 14c, the base cover cap leaf spring clips 185 and 186 rest on the base frame 110 at the root and end of each clip 185 and 186, allowing the middle portion of each clip 185 and 186 to flex downwards. Such a downward flex of the leaf spring clips 185 and 186 allows the upper base cover 190 to assemble and clip into position by rotating in the direction of the arrow B in figure 14b. The leaf spring interface with the upper base cover 190 allows pre load and tolerant fit of the three cover pieces 170, 180 and 190.

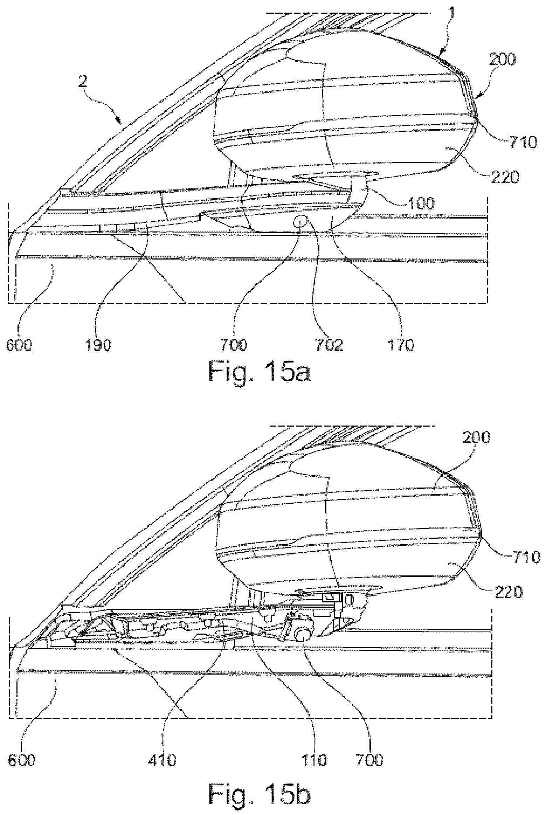

With respect to the figures 15a to 17c the realization of the camera service requirement is described.

In figures 15a the assembled exterior rear view device 1 mounted to the vehicle 2 is shown. To access the camera 700, all the three cover pieces are easily removable while the exterior rear view device 1 remains mounted to the door 600, see figure 15b to 15f.

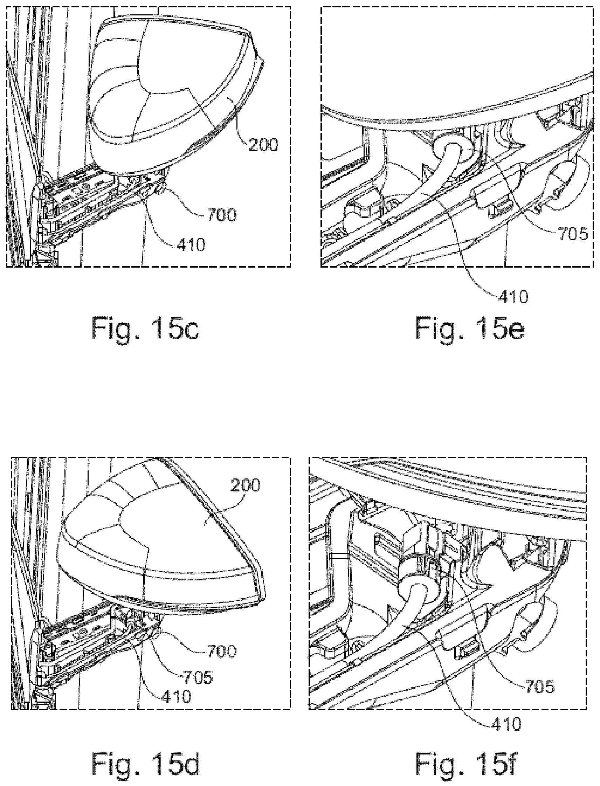

To gain access to a camera connector 705 at the end of the camera harness 410, the head assembly 200 must be set into a knock forward position and locked into place so two hands can be used to remove the camera 700 and its connector 705, with figures 15c and 15b demonstrating the rotation of the head assembly 200 into said knock forward position, and details of the camera connector access is shown in the enlarged illustrations of figures 15e and 15f of parts of figures 15c and 15d, respectively.

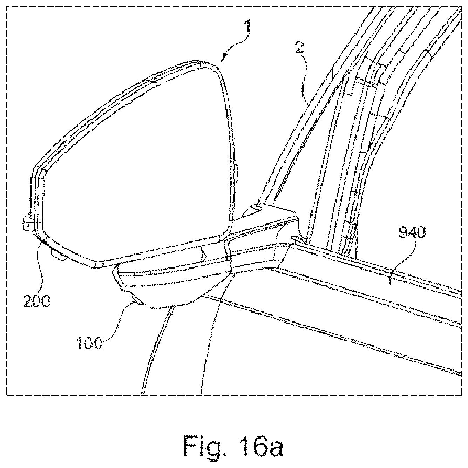

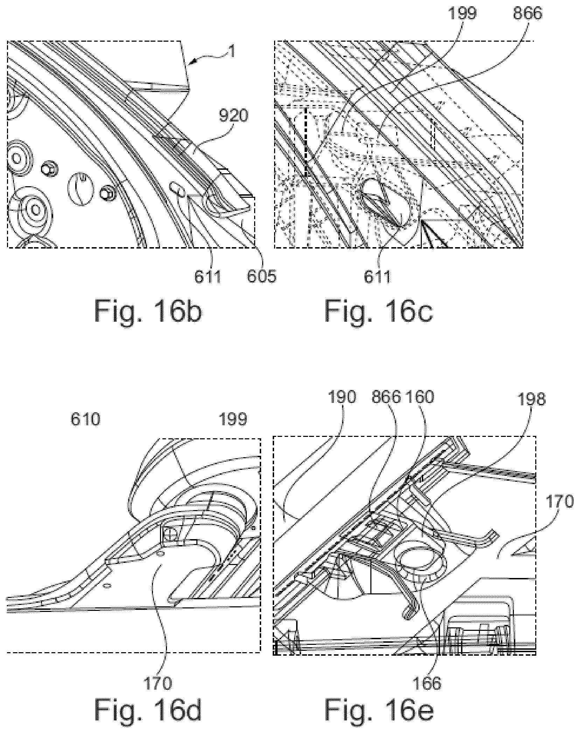

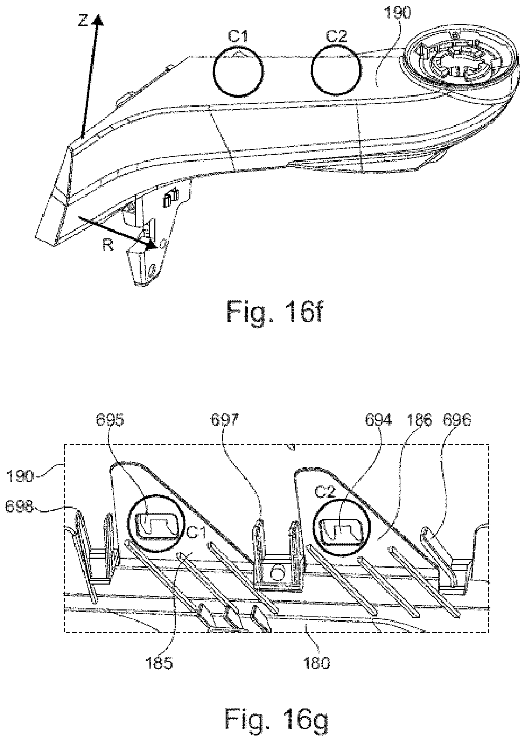

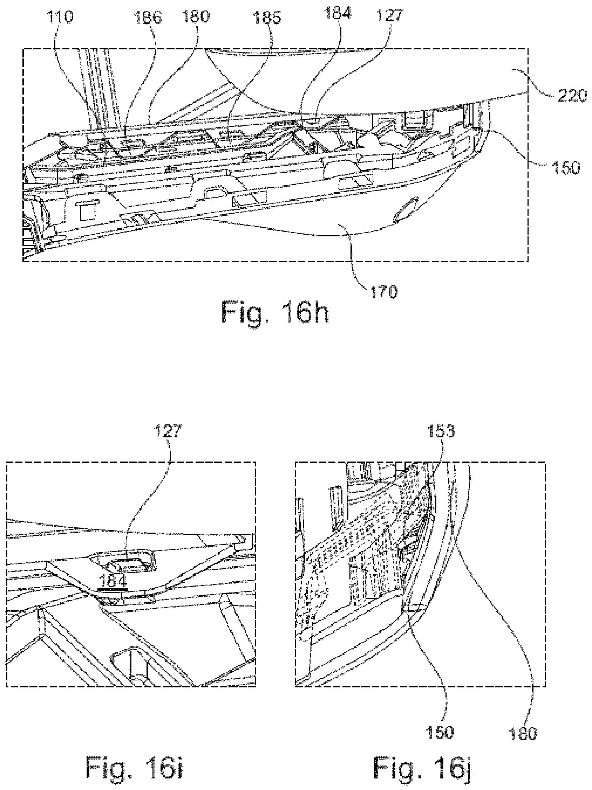

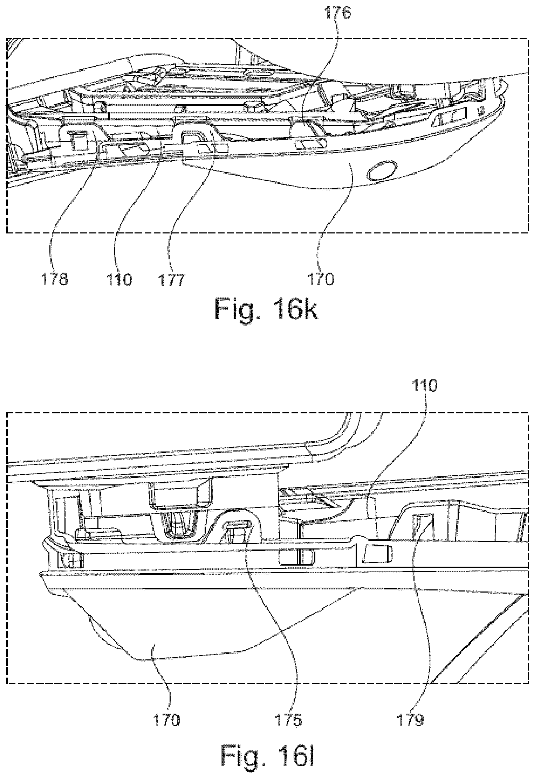

To dis-assemble all three cover pieces 170, 180 and 190 only one tool is needed for dis-lodging or dis-engaging clip connections, as explained in the following with respect to figures 16a to 16l. In figures 16a the assembled exterior rear view device 1 mounted to the vehicle 2 is shown, in another perspective compared to figure 15a and the following five steps as required for the dis-assembly:
- In a first step, the hoop clip 199 shown in figure 13i is accessed through a slot 611 in the door panel 605 to loosen the engagement with the projection 866 of the door gasket substrate 804, see figures 16b and 16c
- In a second step, shown in figures 16 d and 16e, the clip 198 of the upper base cover 190 engaging the pocket 16 of the lower base cover 170, see figure 13h, is loosen by passing through the drain hole 166 located in the lower base cover 170, with the drain hole 166.
- In a third step, shown in figure 16f, the upper base cover 190 is removed by a compound movement, namely an upward movement in Z-direction and a rotation out along the arrow R. To allow said compound movement of the upper base cover 190, the same must be pulled up to dis-engage the two clips 185 and 186 of the base cover cap 180, i.e. to loosen the engagement shown in figure 13g. The location of the respective clip connections are indicated by C1 and C2 in figures 16f and 16g.
- In a fourth step, shown in figures 16h to 16j, to dismount the base cover cap 180, its clip 184 positioned by a projection 127 of the base frame 110 (figure 16i) and its peg projections 153 positioned by the lower base cover 170 (figure 6j) must be dis-engaged. The clip dis-engagement of figure 16i will require the tool, while the peg projections dis-engagement of figure 16j simply needs to be pushed out of position, such that the base cover cap 180 will rotate out.
- In a fifth step, the five clips 175 to 179 of the lower base cover 170 shown in figures 16k and 16l have to be dis-engaged from the base frame 110 such that the lower base cover 170 will naturally fall down in the Z-direction and can be removed.

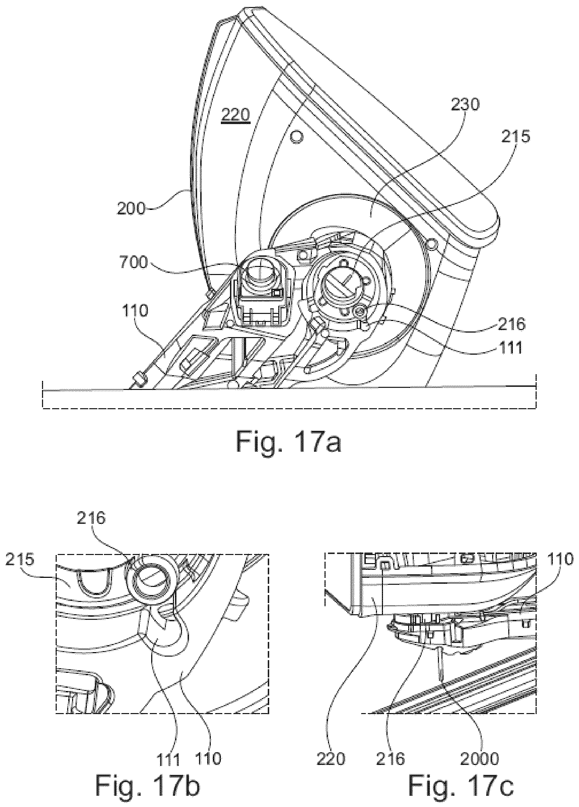

The tool 2000 needed for dis-lodging or dis-engaging the clip connections to dis-assemble all three cover pieces 170, 180 and 190 is explained in the following with respect to figures 17a to 17c.

To avoid the mirror head assembly 200 rotating back into its nominal position, that is from the position shown e.g. in figures 15d, 15f and 17a into the position shown e.g. in figures 15c and 15e, due to a self-return spring mechanism (not shown) and via a pivot joint 230, the tool 2000 with a maximum diameter of 4 mm may be used to lock the base frame 110 relative to the head assembly 200. For that purpose the recess or hole 111 is designed into the base frame 110, which provides easy access to a mechanical stop 216 of a case frame 215 from the bottom of the base assembly 100, after removing the three cover pieces 170, 180 and 190.

All parts the tool 2000 interfaces with are made from aluminum for maximal strength and security. Also the tool 2000 itself may be made out of aluminium.

In summary, the three cover pieces of the present disclosure, namely the lower base cover 170, the base cover cap 180 and the upper base cover 190 are designed
- to easily mantle the base frame 110 without screw connections, but only via clip, snap and/or latch connections amongst themselves as well as the retainer assembly 300, in particular the sealing means 800, and the base frame 110, for providing an aesthetically pleasing appearance as well as accident-proof by avoiding sharp edges and, in addition, for allowing an adaption of the base assembly design to the vehicle design in an easy manner;
- to provide an opening 702 for the camera 700 attached to the base frame 110 via the camera cradle 704, without scratching the camera lens during assembly; and
- to easily dis-mantle the base frame 110 due to said clip, snap and/or latch connections, in particular making usage of only one tool, especially for camera service.

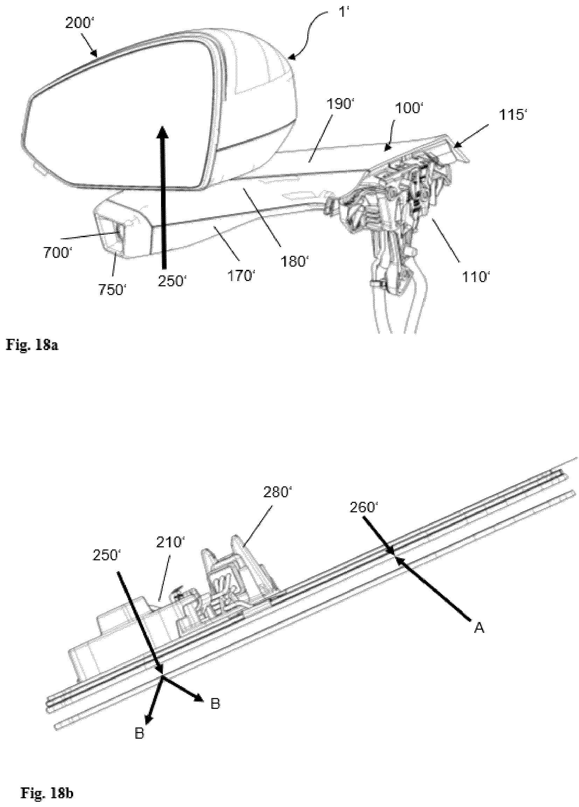

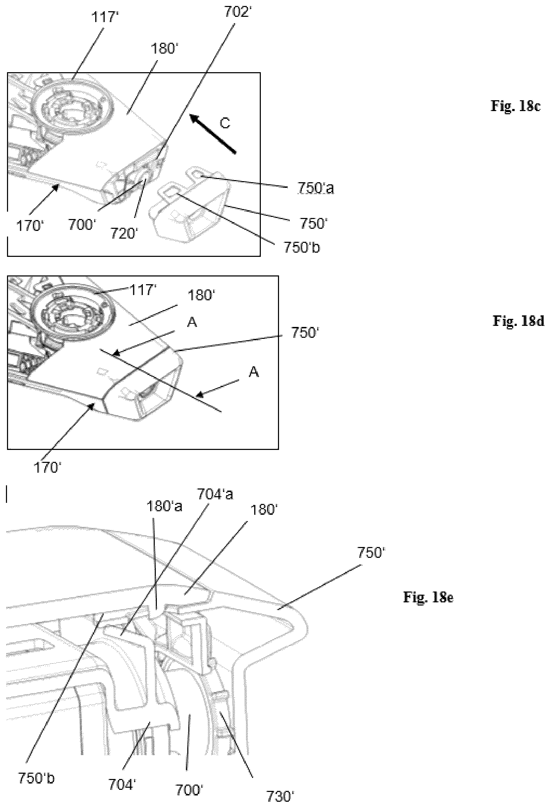

Figures 18a and 18b depict a second external rear view device 1' of the present disclosure. It comprises a base assembly 100' onto which a moveable head assembly 200' is attached, i.e. at a head attachment portion 117' shown in figures 18c and 18d. The base assembly 100' is configured to be mounted to a vehicle at a door attachment portion 115' as described with respect to the first embodiment.

The head assembly 200' comprises a reflective element 250' in form of an at least partly translucent mirror glass and a display element 260' integrated in the head assembly 200' by being arranged behind the at least partly translucent mirror glass in the view direction of a drive as indicated by the arrow A in figure 18b. This allows to present to a driver of a vehicle, to which the external rear view device 1' is attached, a rear view either by reflections on the at least partly translucent mirror glass as indicated by the arrows B in figure 18b or on the display element 260'.

The base assembly 100' comprises a camera 700'. The display element 260' may be activated to present a rear view obtained by the camera 700'. Such an activation may be achieved by the driver for example by pressing a button on a dashboard, via a voice command, by a gesture or the like and/or depending on the output of a sensor (not shown). Such a sensor may be connected to a control unit 280' for controlling the display element 260' and maybe also an articulation assembly 210' for moving the head assembly 200'. Said control unit 280' may be arranged within the head assembly 200' as shown in figure 18b, but may also be arranged within the vehicle.

A sensor signal characteristic for contamination of a lens 720' of the camera 700' may be used to switch off the display unit 260', whereas another sensor signal characteristic for high traffic situations and/or high speed may be used to switch on the display element 260', but many alternatives are within the teaching of the present disclosure.

The camera unit 700' is arranged in the base assembly 100' such that the lens 720' may obtain a rear view image through an opening 702' provided by the base assembly 100', see figure 18c. In detail, the camera 700' may be attached to a base frame 110', via a camera cradle 704', as best seen in figure 18e, and the opening 702' may be provided by cover pieces of the base frame 110'. Said cover pieces may comprise three pieces as described with respect to the first embodiment with respect to the figures 1 to 17c, namely a base cover cap 180', a lower base cover 170' and an upper base cover 190'. Said three base covers 170', 180' and 190' releaseably mantle the base frame 110' by being attached via clip, snap and/or latch connections.

Still further, the cover of the base frame 110' may comprise a glare shield 750', which is described in further detail with respect to figures 18c to 18e.

As can be seen in figures 18c and 18e, the glare shield 750' is provided with two clips 750'a, 750'b to be attached to the base cover cap 180' as well as to the camera cradle 704', which serves to attach the camera 700' to the base frame 110'. This attachment may be the last assembly step on a customer line by sliding the glare shield 750' along the arrow C as indicated in figure 18c.

Figure 18d shows the assembled glare shield 750' and details thereof can be seen in the cross-section taken along line A-A in figure 18e. Accordingly, each clip 750'a, 750'b or the like of the glare shield 750' engages the base cover cap 180', in particular an extension, lug 180'a or the like thereof. The free end of the clip 750'b is shown in figure 18e to be holed by a retention tab 704'a of the camera cradle 704'. This arrangement allows to maintain a small tolerance stack between the different components, with integrity of the glare shield 750' being protected. Further, serviceability is facilitated by this arrangement.

Figure 18e also shows that an outer-rim 730' of the camera unit 700' extends beyond the camera cradle 704' as well as the base cap cover 180', but is shielded by the glare shield 750'. The rim 730' encompasses the lens 720'.

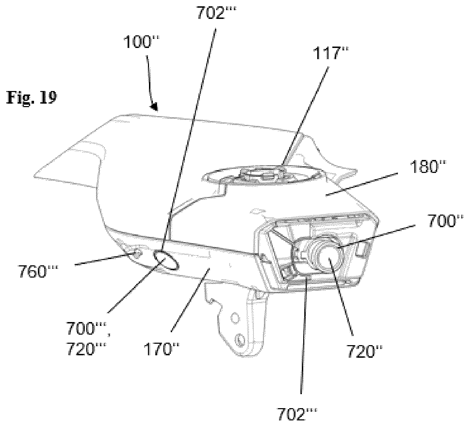

The releasable mantling of the base frame by cover pieces as described for the first and second embodiment, allow for many more alternatives. Figure 19 shows such a further alternative in form of a base assembling 100" of a third rear view device of the present disclosure making usage of a base assembly 100'' equipped with two cameras 700", 700‴, which may be arranged substantially perpendicular to each other and an axis of a head attachment portion 117".

A first camera 700" may extend through an opening 702" in a base cover cap 180" with its lens 720" as described with respect to figures 18a to 18e. A glare shield as described above may be attached. A second camera 700‴ may be arranged such that its lens 720‴ extends through an opening 702" in the lower base cover 170"'. A cleaning system may be associated with the second camera 700"', which may comprise a nozzle 760‴ attached to and/or extending through the lower base cover 170"'. The cleaning system may be controlled by a control unit in dependency of the output of a sensor sensing contamination.

### REFERENCE SIGNS

- 1, 1': exterior rear view device
- 2: vehicle
- 100, 100', 100": base assembly
- 101: clip
- 102: clip
- 103: clip
- 104: clip
- 105: clip
- 106: clip
- 107: clip
- 108: hook aperture
- 109: hook aperture
- 110, 110': base frame
- 111: hole
- 115, 115': door attachment portion
- 116: arm
- 117, 117', 117": head attachment portion
- 118: hook aperture
- 120: location pin
- 121: T shaped location projection
- 122: camera guiding wall
- 123: camera harness guiding channel portion
- 124: opening for harness holder
- 125: location projection
- 126: location projection
- 127: location projection
- 131: screw opening
- 132: screw opening
- 135: step for sealing means clip
- 136: step for sealing means clip
- 137: opening for retainer means clip
- 138: opening for sealing means clip
- 140: harness guiding channel portion
- 141: harness guiding channel portion
- 150: projection
- 151: slot
- 152: tab
- 153: projection
- 160: pocket
- 161: opening
- 162: opening
- 163: wall
- 164: opening
- 165: opening
- 166: drain hole
- 167: opening
- 168: opening
- 170, 170', 170": lower base cover
- 171: multi-functional assembly projection
- 172: hook
- 173: hook
- 174: hook
- 175: clip
- 176: clip
- 177: clip
- 178: clip
- 179: clip
- 180, 180': base cover cap
- 180'a: lug
- 184: clip
- 185: clip
- 186: clip
- 190, 190', 190": upper base cover
- 192: location projection
- 193: location projection
- 194: location projection
- 195: location projection
- 198: clip
- 199: hoop clip
- 200, 200': head assembly
- 210, 210': actuator assembly
- 215: case frame
- 216: mechanical stop
- 220: lower case
- 222: opening of lower case
- 230: pivot joint
- 250': reflective element
- 260': display element
- 280': control unit
- 300: retainer assembly
- 301: retainer means
- 310: sealing portion
- 315: clip
- 316: clip
- 320: holding portion
- 322: opening for location pin
- 340: camera harness guiding channel portion
- 350: hook
- 351: opening for arm of T shaped location projection
- 360: clip
- 371: opening
- 372: opening
- 380: opening for sealing means clip
- 391: T-slot
- 400: harness
- 410: camera harness
- 420: guiding channel
- 500: harness holder
- 510: fixing tie
- 520: clip
- 600: door
- 605: door panel
- 610: opening for hook
- 611: slot
- 620: opening for location pin
- 631: screw opening
- 632: screw opening
- 640: cheater panel
- 691: location peg
- 692: location peg
- 694: clip retention extension
- 695: clip retention extension
- 696: alignment projection
- 697: alignment projection
- 698: alignment projection
- 700, 700', 700", 700‴: camera
- 702, 702', 702", 702‴: opening
- 704, 704': camera cradle
- 704'a: tab
- 705: camera connector
- 710: turn signal indicator
- 720', 720", 720‴: lens
- 730': rim
- 750': glare shield
- 750'a, 750'b: clip
- 742: location rib
- 744: clip
- 746: anti-backout projections
- 760‴: cleaning nozzle
- 800: sealing means / 2K door gasket
- 802: door gasket seal
- 804: door gasket substrate
- 810: clip
- 820: clip opening
- 830: clip
- 840: clip
- 850: datum area for upper case
- 851: T-slot
- 860: hook pocket
- 862: hook pocket
- 866: projection
- 870: rib
- 872: rib
- 881: screw opening
- 882: screw opening
- 900: channel
- 920: glass run seal
- 922: sealing lip
- 940: waist finisher
- 1000: window
- 2000: tool

## Claims

1. A base cover of a base assembly (100, 100', 100") of an exterior rear view device (1, 1') to be mounted to a vehicle (2) and to moveably support a head assembly (200, 200'), comprising three cover pieces designed to releasably mantle a base frame (110, 110') by being attached via clip, snap and/or latch connections,
wherein
the three cover pieces comprise a base cover cap (180, 180', 180"), a lower base cover (170, 170', 170") and an upper base cover (190, 190", 190"),
the base cover cap (180, 180', 180"), the lower base cover (170, 170', 170") and the upper base cover (190, 190", 190") are connected by the snap, clips and/or latch connections to each other and the base frame (110, 110'), without screws, and
the assembly of the base cover cap (180, 180', 180"), the lower base cover (170, 170', 170") and the upper base cover (190, 190", 190") on the base frame (110, 110') is secured by engaging sealing means (800).

2. The base cover of claim 1, wherein
• the three cover pieces are made from plastic, and/or
• the three cover pieces isolate the base frame (110, 110') being made from a metal;
and/or
• the three cover pieces cover an arm (116) of the base frame (110, 110') from a door attachment portion (115, 115') to a head attachment portion (117, 117', 117") of the base frame (110, 110'), and/or
• the three cover pieces are connected by the clip, snap and/or latch connections, with said connections being provided between the three cover pieces, the sealing means (800) and the base frame (110) to provide the base assembly.

3. The base cover of claim 2, wherein
• the lower base cover (170, 170") is provided with an opening (702, 702‴) for a camera (700, 700‴) attached to the base frame (110), in particular via a camera cradle (704), and/or a drain hole (166), and/or
• the lower base cover (170) is provided with one or more first attachment means, in particular five clips (175 - 179) and a multi-functional assembly projection (171), for attachment to the base frame (110); and/or
• the lower base cover (170) is provided with one or more second attachment means, in particular comprising three hooks (172, 173, 174), for attachment to the sealing means (800), in particular a door gasket substrate (804) of the sealing means (800); and/or
• the lower base cover (170) has an edge to engage the sealing means (800), in particular a door seal gasket (802) of the sealing means (800) and/or for an outer sealing; and/or
• the lower base cover (170) is provided with one or more third attachment means for attachment to the base cover cap (180), in particular comprising a multi-functional assembly projection (171) and openings (161, 168), and/or
• the lower base cover (170) is provided with one or more fourth attachment means for attachment to the upper base cover (190), in particular comprising a pocket (160) and openings (161, 162, 164, 165).

4. The base cover of claim 2 or 3, wherein
• the base cover cap (180, 180', 180") is provided with an opening (702', 702") for a camera (700, 700', 700") attached to the base frame (110, 110'), in particular via a camera cradle (704'); and/or
• the base cover cap (180) is provided with one or more fifth attachment means for attachment to the lower base cover (170), in particular comprising peg like projections (150, 153) and a tab (152); and/or
• the base cover cap (180) is provided with one or more sixth attachment means for attachment to the upper base cover (190), in particular comprising peg like projections (153), a slot (151) and two clips (185, 186), preferably in form of two leaf spring clips adapted to rest on the base frame (110) at the root and end, allowing the middle portion there between to flex downwards; and/or
• the base cover cap (180) is provided with one or more seventh attachment means for attachment to the base frame (110), in particular comprising at least one clip (184).

5. The base cover of any one of the claims 2 to 4, wherein
• the upper base cover (190) is provided with an opening for a camera attached to the base frame, in particular via a camera cradle; and/or
• the upper base cover (190) is provided with one or more eighth attachment means for attachment to the lower base cover (170), in particular comprising location pegs (192 to 198, 691, 692) and/or at least one clip (198);
• the base cover cap (180) is provided with one or more ninth attachment means for attachment to with the base cover cap (180), in particular comprising clip retention extensions (694, 695) and at least one alignment projection (696 - 698), and/or
• the upper base cover (190) is provided with one or more tenth attachment means, in particular a hoop clip (199), for engagement with the sealing element (800), in particular a projection (866) of the door gasket substrate (804).

6. The base cover of any one of the preceding claims, further comprising
a glare shield (750') surrounding a lens (720') of a camera (700'), in particular the lens (720') extending through the opening (702', 702") of the base cover cap (180', 180"), and
providing an opening through which the camera (700') can obtain images,
wherein preferably the glare shield (750') is configured to be releaseably attached to at least one of the three cover pieces and/or a camera cradle (704') of the camera (700') via at least one the via clip, snap and/or latch connection.

7. The base cover of claim 6, wherein
the glare shield (750') is provided with at least one clip (750'a, 750'b),
wherein preferably the at least one clip (750'a, 750'b) of the glare shield (750') is configured to at least one of
• engaging the base cover cap (180') or at least one extension or lug (180'a) of the base cover cap (180') and
• being supported by the camera cradle (704') or at last one retention tab (704'a) of the camera cradle (704').

8. An exterior rear view device (1, 1'), comprising
a base assembly (100, 100', 100") with a base frame (110, 110') to be attached to a vehicle (2),
a head assembly (200, 200') for supporting at least one reflective element (250'), display element (260') and/or camera, with the head assembly (200, 200') being attached to the base assembly (100, 100', 100") in a moveable manner, and
a sealing means (800) adapted to be installed between the base assembly (100, 100', 100") and a door (600) of the vehicle (2),
wherein the
the base frame (110, 110') is mantled with a base cover of any one of the preceding claims.

9. The exterior rear view device of claim 8, further comprising
at least one camera (700, 700', 700", 700‴), preferably positioned in a non-moving area of the moveable head assembly or in the base assembly, in particular attached to the base frame (110, 110'), and/or viewing through an opening (702, 702", 702‴) provided by one of the three base cover pieces, and/or
a camera cradle (704, 704') which is configured to be attached to the base frame (110, 110'), in particular by a friction fit and without any separable attachment element, with the camera cradle (704, 704') preferably being a plastic unit for isolating the camera (700, 700', 700", 700‴) from the base frame (110, 110'); and/or
a retainer means (301) between the base frame (110) and the sealing means (800), with the retainer means (301) preferably being a plastic unit for sealing and guiding harness (400, 410).

10. The external rear view device of claim 8 or 9, further comprising
an articulation assembly (210, 210') for moving the head assembly (200, 200') relative to the base assembly (100, 100', 100"), and/or
at least one functional device, comprising
• a light module, a turn signal indicator module, a blind spot indicator module, or a human machine interface,
• a Bluetooth module,
• a sensor module, a temperature sensor, a touch sensor or a contamination sensor, and
• a cleaning device for cleaning the lens (720ʺʺ), in particular comprising at least one fluid port or nozzle (760‴), and/or
a control unit (280'), in particular adapted for controlling at least one of the display element (260'), the articulation assembly (210') and the functional device.

11. The external rear view device of any one of the claims 8 to 10, wherein
the display element (260') is configured to be at least one of
• viewable through the reflective element (250') when activated and
• activated by at least a driver of the vehicle (2), depending on an output signal of the sensor module, via a vehicle control system and/or via the control unit (280').

12. A vehicle (2) with a door (600) having a door panel (605) and supporting a window (1000) as well as a cheater panel (640) sealed by a glass run seal (920), **characterized by** comprising the exterior rear view device (1, 1') of any one of the claims 8 to 11, wherein the door panel (605) also supports the exterior rear view device (1, 1').

13. The vehicle of claim 12, wherein
the glass run seal (920) is arranged within a channel (900) provided by the base frame (110) with the retainer means (301) and the sealing means (800); and/or
a lip (922) of the glass run seal (920) engages the cheater panel (640) and the upper base cover (190); and/or
the glass run seal (920) is at least partly covered by a waist finisher (940) such that the base assembly (100) extends from the waist finisher (940).

14. A method for assembling the base cover of any one of the claims 1 to 7, comprising the following steps
attaching the lower base cover (170) to the sealing means (800) and the base frame (110),
wherein preferably an edge of the lower base cover (170) is brought into engagement with the door gasket seal (802) such that the lower base cover (170) can be rotated until it connects with the base frame (110) and its opening (702) is arranged to allow the camera (700) to view out of the cover,
• with in particular the hooks (172, 173, 174) the lower base cover (170) being rotated into hook pockets (860, 862) and/or between ribs (870, 872) provided by the door gasket substrate (804).

15. The method of claim 14, comprising the following step
attaching the base cover cap (180) to the lower base cover (170),
wherein preferably the base cover cap (180) is attached at one end to the lower base cover (170) for creating a rotation point to rotate the base cover cap (180) into its final position with attachment also at its other end,
• with in particular the tab (152) at the end of the base cover cap (180), which faces the door attachment portion (115) of the base frame (110), being entered into the opening (168) of the lower base cover (170) for defining the attachment direction and locks in behind the lower base cover (170) for creating a rotation point, and/or
• with in particular the base cover cap (180) being forced to flex outboard while being rotated into its final position, and/or
• with in particular the peg type projection (150) at the end of the base cover cap (180), which faces the head attachment portion (117) of the base frame (110), being entered into a first slot in the multi-functional assembly projection (171) of the lower base cover (170) and another peg type projection (153) of the base cover cap (180) being entered into another slot in the multi-functional assembly projection (171) of the lower base cover (170) as well as flexes back into the opening (162) of the lower base cover (170) for controlling the final fit of the base cover cap (180).

16. The method of any one of the claims 14 or 15, comprising the following steps attaching the upper base cover (190) to the base cover cap (180) and the lower base cover (170),
wherein preferably the attachment of the upper base cover (190) is assisted by the base cover cap (180) being assembled to the base frame (110) by providing a ramp guiding a rotational movement of the upper base cover (190)
• with in particular the upper base cover (190) being attached at one end to the lower base cover (170) and the base cover cap (180) for creating a rotation point to rotate upper base cover (190) into its final position with attachment also at its other end,
and/or
• with in particular the two location pegs (691, 692) at the end of the upper base cover (190), which faces the head attachment portion (117) of the base frame (110), being fitted into two corresponding slots, one being provided by the opening (162) in lower base cover (170) and the other by the slot (151) being formed in the projection (150) of the base cover cap (180), and/or
• with in particular the outermost location peg (691) pulling the base cover cap (180) into its final position and defining a rotation axis; and/or
• with in particular rotating the upper base cover (190) until the four location projections (192 - 195) position the upper base cover (190) on the lower base cover (170), and/or
• with in particular the ramp is provided by the two clips (184, 185) next to the end of the upper base cover (190), which faces the head attachment portion (117) of the base frame (110), by said two clips (184, 185) resting on the base frame (110) at their roots and ends, allowing the middle portions to flex downwards, and/or
• with in particular the projections (696 - 698) align the upper base cover (190) and lead the clip retention extensions (694, 695) onto the corresponding clips (185, 186) of the base cover cap (180), and/or
• with in particular the clip (198) at the end of the upper base cover (190), which faces the door attachment portion (115) of the base frame (110), being entered into the pocket (160) in the lower base cover (170), and/or
• with in particular the hoop clip (199) at the end of the upper base cover (190), which faces the door attachment portion (115) of the base frame (110), engaging with the projection (866) of the door gasket substrate (804).

17. The method of any one of the claims 14 to 16, comprising the following step connecting the glare shield (750') for the camera (700'), preferably by pushing the same between the base cover cap (180') and the cradle (704') of said camera (700'),
with in particular pushing the at least one clip (750'a, 750'b) in engagement with the at least one extension or lug (180'a) of the base cover cap (180') and the at last one retention tab (704'a) of the camera cradle (704'), and/or
with in particular the connecting step of the glare shield (750') being the last step of assembling the base cover.

18. A method for dis-assembling the base cover of any one of the claims 1 to 7, after assembling the base cover with a method of any one of the claims 14 to 17, wherein
the base cover cap (180), the lower base cover (170) and the upper base cover (190) are dis-mantled with a single tool (2000) by dis-lodging the snap, clips and/or latch connections and/or with the base frame (110) being mounted to the vehicle (2).

19. The method of claim 18, wherein
• the tool (2000) is a metal piece, preferably made out of aluminium, and/or
• the tool (2000) has a maximum diameter of 4 mm, preferably is in form of a cylinder or pin; and/or
• the tool (2000) locks the mirror head assembly (200) in a knock forward position to gain access to a camera connector (705) and/or the camera (700) when the base cover cap (180), the lower base cover (170) and the upper base cover (190) have been dis-mantled from the base frame (110); and/or
• the tool (2000) dis-engages at least one of the snap, clips and/or latch connections.

20. The method of claim 18 or 19, comprising the following steps, when the base cover has been assembled with the method of any one of the claims 10 to 13,
• accessing the hoop clip (199) of the upper base cover (190) through a slot (611) in door panel (605) to loosen the engagement with the projection (866) of the door gasket substrate (804), and/or
• passing through the drain hole (166) of the lower base cover (170) to loosen the engagement of the clip (198) of the upper base cover (190) with the pocket (160) of the lower base cover (170), and/or
• removing the upper base cover (190) by pulling its clip retention extensions (694, 695) out of the two clips (185, 186) of the base cover cap (180), and/or
• dis-mounting the base cover cap (180) by dis-engaging its clip (184) from the location projection (127) of the base frame (110), preferably by using the tool (2000), and its peg projections (150, 153) from the multi-functional assembly projection (171) of the lower base cover (170), preferably by pushing them out of position, such that the base cover cap (180) can rotate out, and/or
• dis-engaging the five clips (177 - 179) of the lower base cover (170) from the base frame (110) such that the lower base cover (170) can be removed.

21. The method of claim 19 or 20, comprising the following step
locking the mirror head assembly (200) in the knock forward position by inserting the tool (2000) into a recess or hole (111) of the base frame (110) to access a mechanical stop (216) of a case frame (215) of the head assembly (200) from the bottom of the base assembly (100); wherein preferably all parts the tool (2000) interfaces with are made from aluminum.

22. The method of any one of the claims 18 to 21, comprising the following step
the glare shield (750') is dis-mantled, preferably with the tool (2000), by dis-lodging the snap, clips and/or latch connections,
with in particular the dis-mantling of the glare shield (750') being the first dis-mantling step.

## Patentansprüche

1. Basisabdeckung einer Basisbaugruppe (100, 100', 100") einer Außenrückblickvorrichtung (1, 1') zur Anbringung an einem Fahrzeug (2) und zum bewegbaren Tragen einer Kopfbaugruppe (200, 200'), die drei Abdeckteile umfasst, die dazu gestaltet sind, einen Basisrahmen (110, 110') abnehmbar zu umhüllen, indem sie mittels Klammer-, Schnapp- und/oder Rastverbindungen angebracht sind,
wobei
die drei Abdeckteile eine Basisabdeckungskappe (180, 180', 180"), eine untere Basisabdeckung (170, 170', 170") und eine obere Basisabdeckung (190, 190', 190") umfassen,
die Basisabdeckungskappe (180, 180', 180"), die untere Basisabdeckung (170, 170', 170") und die obere Basisabdeckung (190, 190', 190") durch die Klammer-, Schnapp- und/oder Rastverbindungen miteinander und mit dem Basisrahmen (110, 110') ohne Schrauben verbunden sind und
die Baugruppe der Basisabdeckungskappe (180, 180', 180"), der unteren Basisabdeckung (170, 170', 170") und der oberen Basisabdeckung (190, 190', 190") durch Eingreifen von Abdichtmittel (800) am Basisrahmen (110, 110') gesichert ist.

2. Basisabdeckung nach Anspruch 1, wobei
• die drei Abdeckteile aus Kunststoff hergestellt sind und/oder
• die drei Abdeckteile den Basisrahmen (110, 110'), der aus einem Metall hergestellt ist, isolieren und/oder
• die drei Abdeckteile einen Arm (116) des Basisrahmens (110, 110') von einem Türanbringungsabschnitt (115, 115') bis zu einem Kopfanbringungsabschnitt (117, 117', 117") des Basisrahmens (110, 110') abdecken und/oder
• die drei Abdeckteile durch die Klammer-, Schnapp- und/oder Rastverbindungen verbunden sind, wobei die Verbindungen zwischen den drei Abdeckteilen, dem Abdichtmittel (800) und dem Basisrahmen (110) bereitgestellt sind, um die Basisbaugruppe bereitzustellen.

3. Basisabdeckung nach Anspruch 2, wobei
• die untere Basisabdeckung (170, 170") mit einer Öffnung (702, 702‴) für eine Kamera (700, 700‴), die an dem Basisrahmen (110), insbesondere über einen Kameraträger (704), angebracht ist, und/oder einem Ablaufloch (166) bereitgestellt ist; und/oder
• die untere Basisabdeckung (170) mit einem oder mehreren ersten Anbringungsmitteln, insbesondere fünf Klammern (175-179) und einem multifunktionalen Baugruppenvorsprung (171), zur Anbringung am Basisrahmen (110) bereitgestellt ist; und/oder
• die untere Basisabdeckung (170) mit einem oder mehreren zweiten Anbringungsmitteln, die insbesondere drei Haken (172, 173, 174) umfassen, zur Anbringung an dem Abdichtmittel (800), insbesondere einem Türdichtungssubstrat (804) des Abdichtmittels (800), bereitgestellt ist; und/oder
• die untere Basisabdeckung (170) einen Rand aufweist, um das Abdichtmittel (800), insbesondere eine Türdichtung (802) des Abdichtmittels (800), in Eingriff zu bringen, und/oder für eine äußere Abdichtung; und/oder
• die untere Basisabdeckung (170) mit einem oder mehreren dritten Anbringungsmitteln, die insbesondere einen multifunktionalen Baugruppenvorsprung (171) und Öffnungen (161, 168) umfassen, zur Anbringung an der Basisabdeckungskappe (180) bereitgestellt ist; und/oder
• die untere Basisabdeckung (170) mit einem oder mehreren vierten Anbringungsmitteln, die insbesondere eine Tasche (160) und Öffnungen (161, 162, 164, 165) umfassen, zur Anbringung an der oberen Basisabdeckung (190) bereitgestellt ist.

4. Basisabdeckung nach Anspruch 2 oder 3, wobei
• die Basisabdeckungskappe (180, 180', 180") mit einer Öffnung (702', 702") für eine Kamera (700, 700', 700") versehen ist, die an dem Basisrahmen (110, 110'), insbesondere über einen Kameraträger (704'), angebracht ist; und/oder
• die Basisabdeckungskappe (180) mit einem oder mehreren fünften Anbringungsmitteln, die insbesondere zapfenähnliche Vorsprünge (150, 153) und eine Zunge (152) umfassen, zur Anbringung an der unteren Basisabdeckung (170) bereitgestellt ist; und/oder
• die Basisabdeckungskappe (180) mit einem oder mehreren sechsten Anbringungsmitteln zur Anbringung an der oberen Basisabdeckung (190) bereitgestellt ist, die insbesondere zapfenähnliche Vorsprünge (153), einen Schlitz (151) und zwei Klammern (185, 186) umfassen, vorzugsweise in Form von zwei Blattfederklammern, die dazu ausgelegt sind, auf dem Basisrahmen (110) am Fußpunkt und am Ende aufzuliegen, was ermöglicht, dass sich der mittlere Abschnitt dazwischen nach unten biegt; und/oder
• die Basisabdeckkappe (180) mit einem oder mehreren siebten Anbringungsmitteln, die insbesondere mindestens eine Klammer (184) umfassen, zur Anbringung am Basisrahmen (110) bereitgestellt ist.

5. Basisabdeckung nach einem der Ansprüche 2 bis 4, wobei
• die obere Basisabdeckung (190) mit einer Öffnung für eine Kamera versehen ist, die an dem Basisrahmen, insbesondere über einen Kameraträger, angebracht ist; und/oder
• die obere Basisabdeckung (190) mit einem oder mehreren achten Anbringungsmitteln, die insbesondere Positionierungszapfen (192 bis 198, 691, 692) und/oder mindestens eine Klammer (198) umfassen, zur Anbringung an der unteren Basisabdeckung (170) bereitgestellt ist;
• die Basisabdeckungskappe (180) mit einem oder mehreren neunten Anbringungsmitteln, die insbesondere Klammerhalterungserweiterungen (694, 695) und mindestens einen Ausrichtungsvorsprung (696-698) umfassen, zur Anbringung an der Basisabdeckungskappe (180) bereitgestellt ist; und/oder
• die obere Basisabdeckung (190) mit einem oder mehreren zehnten Anbringungsmitteln, insbesondere einer Bügelklammer (199), zum Eingriff in das Abdichtelement (800), insbesondere einen Vorsprung (866) des Türdichtungssubstrats (804), bereitgestellt ist.

6. Basisabdeckung nach einem der vorangehenden Ansprüche, die ferner umfasst:
eine Blendlichtabschirmung (750'), die eine Linse (720') einer Kamera (700'), insbesondere die sich durch die Öffnung (702', 702") der Basisabdeckungskappe (180', 180") erstreckende Linse (720'), umgibt und eine Öffnung, durch welche die Kamera (700') Bilder erfassen kann, bereitstellt,
wobei die Blendlichtabschirmung (750') vorzugsweise dazu ausgestaltet ist, über mindestens eine der Klammer-, Schnapp- und/oder Rastverbindung an mindestens einem der drei Abdeckteile und/oder einem Kameraträger (704') der Kamera (700') abnehmbar angebracht zu werden.

7. Basisabdeckung nach Anspruch 6, wobei
die Blendlichtabschirmung (750') mit mindestens einer Klammer (750'a, 750'b) versehen ist,
wobei die mindestens eine Klammer (750'a, 750'b) der Blendlichtabschirmung (750') für mindestens eines von Folgendem ausgestaltet ist:
• die Basisabdeckungskappe (180') oder mindestens eine Erweiterung oder Öse (180'a) der Basisabdeckungskappe (180') in Eingriff zu bringen und/oder
• von dem Kameraträger (704') oder mindestens einer Halterungszunge (704'a) des Kameraträgers (704') getragen zu werden.

8. Außenrückblickvorrichtung (1, 1'), die umfasst:
eine Basisbaugruppe (100, 100', 10") mit einem Basisrahmen (110, 110') zur Anbringung an einem Fahrzeug (2),
eine Kopfbaugruppe (200, 200') zum Tragen mindestens eines Reflexionselements (250'), eines Displayelements (260') und/oder einer Kamera, wobei die Kopfbaugruppe (200, 200') an der Basisbaugruppe (100, 100', 100") bewegbar angebracht ist, und
ein Abdichtmittel (800), das dazu ausgelegt ist, zwischen der Basisbaugruppe (100, 100', 100") und einer Tür (600) des Fahrzeugs (2) installiert zu werden,
wobei
der Basisrahmen (110, 110') mit einer Basisabdeckung nach einem der vorangehenden Ansprüche umhüllt ist.

9. Außenrückblickvorrichtung nach Anspruch 8, die umfasst:
mindestens eine Kamera (700, 700', 700", 700‴), die vorzugsweise in einem sich nicht bewegenden Bereich der bewegbaren Kopfbaugruppe oder in der Basisbaugruppe positioniert ist, insbesondere am Basisrahmen (110, 110') angebracht ist, und/oder durch eine von einem der drei Basisabdeckteile bereitgestellte Öffnung (702, 702", 702‴) sieht; und/oder
einen Kameraträger (704, 704'), der dazu ausgestaltet ist, am Basisrahmen (110, 110') angebracht zu werden, insbesondere durch eine Friktionspassung und ohne jegliches abtrennbare Anbringungselement, wobei der Kameraträger (704, 704') vorzugsweise eine Kunststoffeinheit zum Isolieren der Kamera (700, 700', 700", 700‴) vom Basisrahmen (110, 110') ist; und/oder
ein Halterungsmittel (301) zwischen dem Basisrahmen (110) und dem Abdichtmittel (800), wobei das Halterungsmittel (301) vorzugsweise eine Kunststoffeinheit zum Abdichten und Führen eines Kabelbaums (400, 410) ist.

10. Außenrückblickvorrichtung nach Anspruch 8 oder 9, die umfasst:
eine Gelenkverbindungsbaugruppe (210, 210') zum Bewegen der Kopfbaugruppe (200, 200') relativ zur Basisbaugruppe (100, 100', 100") und/oder
mindestens eine funktionelle Vorrichtung, die umfasst:
• ein Lichtmodul, ein Fahrtrichtungsanzeigemodul, ein Toter-Winkel-Anzeigemodul oder eine Mensch-Maschine-Schnittstelle,
• ein Bluetooth-Modul,
• ein Sensormodul, einen Temperatursensor, einen Berührungssensor oder einen Kontaminationssensor und
• eine Reinigungsvorrichtung zum Reinigen der Linse (720ʺʺ), die insbesondere mindestens eine(n) Fluidanschluss oder Fluiddüse (760‴) umfasst, und/oder
eine Steuereinheit (280'), die insbesondere zum Steuern mindestens eines/einer des Displayelements (260'), der Gelenkverbindungsbaugruppe (210') und der funktionellen Vorrichtung ausgelegt ist.

11. Außenrückblickvorrichtung nach einem der Ansprüche 8 bis 10, wobei das Displayelement (260') für mindestens eines von Folgendem ausgestaltet ist:
• bei Aktivierung durch das Reflexionselement (250') sichtbar zu sein und
• je nach einem Ausgabesignal des Sensormoduls über ein Fahrzeugsteuerungssystem und/oder über die Steuereinheit (280') durch mindestens einen Fahrer des Fahrzeugs (2), aktiviert zu werden.

12. Fahrzeug (2) mit einer Tür (600), die ein Türblatt (605) aufweist und ein Fenster (1000) sowie eine Dreiecksblende (640), die von einer Glasführungsdichtung (920) abgedichtet ist, trägt, **dadurch gekennzeichnet, dass** sie die Außenrückblickvorrichtung (1, 1') nach einem der Ansprüche 8 bis 11 umfasst, wobei das Türblatt (605) auch die Außenrückblickvorrichtung (1, 1') trägt.

13. Fahrzeug nach Anspruch 12, wobei
die Glasführungsdichtung (920) innerhalb einer vom Basisrahmen (110) bereitgestellten Nut (900) mit dem Halterungsmittel (301) und dem Abdichtmittel (800) angeordnet ist; und/oder
eine Lippe (922) der Glasführungsdichtung (920) die Dreiecksblende (640) und die obere Basisabdeckung (190) in Eingriff bringt; und/oder
die Glasführungsdichtung (920) zumindest teilweise derart von einer Gürtellinienleiste (940) abgedeckt ist, dass sich die Basisbaugruppe (100) von der Gürtellinienleiste (940) erstreckt.

14. Verfahren zur Montage der Basisabdeckung nach einem der Ansprüche 1 bis 7, das die folgenden Schritte umfasst:
Anbringen der unteren Basisabdeckung (170) an dem Dichtungsmittel (800) und dem Basisrahmen (110), wobei ein Rand der unteren Basisabdeckung (170) vorzugsweise derart mit der Türdichtung (802) in Eingriff gebracht wird, dass die untere Basisabdeckung (170) gedreht werden kann, bis sie sich mit dem Basisrahmen (110) verbindet und ihre Öffnung (702) angeordnet ist, um zu ermöglichen, dass die Kamera (700) aus der Abdeckung sieht,
• wobei insbesondere die Haken (172, 173, 174) der unteren Basisabdeckung (170) in Hakentaschen (860, 862) und/oder zwischen von dem Türdichtungssubstrat (804) bereitgestellten Lamellen (870, 872) gedreht werden.

15. Verfahren nach Anspruch 14, das den folgenden Schritt umfasst:
Anbringen der Basisabdeckungskappe (180) an der unteren Basisabdeckung (170),
wobei die Basisabdeckungskappe (180) vorzugsweise an einem Ende an der unteren Basisabdeckung (170) angebracht ist, um einen Drehpunkt zum Drehen der Basisabdeckungskappe (180) in ihre endgültige Position zu schaffen, mit einer Anbringung auch an ihrem anderen Ende,
• wobei insbesondere die Zunge (152) an dem Ende der Basisabdeckungskappe (180), die zum Türanbringungsabschnitt (115) des Basisrahmens (110) zeigt, in die Öffnung (168) der unteren Basisabdeckung (170) eingeführt wird, um die Anbringungsrichtung zu definieren, und hinter der unteren Basisabdeckung (170) einrastet, um einen Drehpunkt zu schaffen, und/oder
• wobei sich insbesondere die Basisabdeckungskappe (180) nach außen biegen muss, während sie in ihre endgültige Position gedreht wird, und/oder
• wobei insbesondere der Vorsprung vom Zapfentyp (150) an dem Ende der Basisabdeckungskappe (180), das zum Kopfanbringungsabschnitt (117) des Basisrahmens (110) zeigt, in einen ersten Schlitz in dem multifunktionalen Baugruppenvorsprung (171) der unteren Basisabdeckung (170) eingeführt wird und ein anderer Vorsprung vom Zapfentyp (153) der Basisabdeckungskappe (180) in einen anderen Schlitz in dem multifunktionalen Baugruppenvorsprung (171) der unteren Basisabdeckung (170) eingeführt wird und sich auch in die Öffnung (162) der unteren Basisabdeckung (170) zurückbiegt, um die endgültige Passung der Basisabdeckungskappe (180) zu steuern.

16. Verfahren nach einem der Ansprüche 14 oder 15, das die folgenden Schritte umfasst:
Befestigen der oberen Basisabdeckung (190) an der Basisabdeckungskappe (180) und der unteren Basisabdeckung (170),
wobei die Anbringung der oberen Basisabdeckung (190) vorzugsweise von der Basisabdeckungskappe (180) unterstützt wird, die durch Bereitstellen einer Schräge zum Führen einer Drehbewegung der oberen Basisabdeckung (190) am Basisrahmen (110) montiert ist,
• wobei insbesondere die obere Basisabdeckung (190) an einem Ende an der unteren Basisabdeckung (170) und der Basisabdeckungskappe (180) angebracht ist, um einen Drehpunkt zum Drehen der oberen Basisabdeckung (190) in ihre endgültige Position zu schaffen, mit einer Anbringung auch an ihrem anderen Ende; und/oder
• wobei insbesondere die zwei Positionierungszapfen (691, 692) an dem Ende der oberen Basisabdeckung (190), das zum Kopfanbringungsabschnitt (117) des Basisrahmens (110) zeigt, in zwei entsprechende Schlitze passen, wobei einer durch die Öffnung (162) in der unteren Basisabdeckung (170) und der andere durch den in dem Vorsprung (150) der Basisabdeckungskappe (180) ausgebildeten Schlitz (151) bereitgestellt wird; und/oder
• wobei insbesondere der äußerste Positionierungszapfen (691) die Basisabdeckungskappe (180) in ihre endgültige Position zieht und eine Drehachse definiert; und/oder
• wobei insbesondere die obere Basisabdeckung (190) gedreht wird, bis die vier Positionierungszapfen (192-195) die obere Basisabdeckung (190) auf der unteren Basisabdeckung (170) positionieren; und/oder
• wobei insbesondere die Schräge durch die zwei Klammern (184, 185) neben dem Ende der oberen Basisabdeckung (190), das zum Kopfanbringungsabschnitt (117) des Basisrahmens (110) zeigt, bereitgestellt wird, durch die zwei Klammern (184, 185), die auf dem Basisrahmen (110) an ihren Fußpunkten und ihren Enden aufliegen und es ermöglichen, dass sich die Mittelabschnitte nach unten biegen; und/oder
• wobei sich insbesondere die Vorsprünge (696-698) an der oberen Basisabdeckung (190) ausrichten und die Klammerhalterungserweiterungen (694, 695) auf die entsprechenden Klammern (185, 186) der Basisabdeckungskappe (180) führen; und/oder
• wobei insbesondere die Klammer (198) an dem Ende der oberen Basisabdeckung (190), das zum Türanbringungsabschnitt (115) des Basisrahmens (110) zeigt, in die Tasche (160) in der unteren Basisabdeckung (170) eingeführt wird; und/oder
• wobei insbesondere die Bügelklammer (199) an dem Ende der oberen Basisabdeckung (190), das zum Türanbringungsabschnitt (115) des Basisrahmens (110) zeigt, in den Vorsprung (866) des Türdichtungssubstrats (804) eingreift.

17. Verfahren nach einem der Ansprüche 14 bis 16, das den folgenden Schritt umfasst:
Verbinden der Blendlichtabschirmung (750') für die Kamera (700'), vorzugsweise durch Drücken auf dieselbe zwischen der Basisabdeckungskappe (180') und dem Träger (704') der Kamera (700'),
wobei insbesondere auf mindestens eine Klammer (750'a, 750'b) gedrückt wird, die mit der mindestens einen Erweiterung oder Öse (180'a) der Basisabdeckungskappe (180') und der mindestens einen Halterungszunge (704'a) des Kameraträgers (704') in Eingriff steht, und/oder
wobei insbesondere der Verbindungsschritt der Blendlichtabschirmung (750') der letzte Schritt der Montage der Basisabdeckung ist.

18. Verfahren zur Demontage der Basisabdeckung nach einem der Ansprüche 1 bis 7 nach der Montage der Basisabdeckung mit einem Verfahren nach einem der Ansprüche 14 bis 17, wobei
die Basisabdeckungskappe (180), die untere Basisabdeckung (170) und die obere Basisabdeckung (190) mit einem einzigen Werkzeug (2000) durch Entfernen der Klammer-, Schnapp- und/oder Rastverbindungen und/oder mit dem an dem Fahrzeug (2) montierten Basisrahmen (110) demontiert werden.

19. Verfahren nach Anspruch 18, wobei
• das Werkzeug (2000) ein Metallstück ist, das vorzugsweise aus Aluminium hergestellt ist; und/oder
• das Werkzeug (2000) einen maximalen Durchmesser von 4 mm aufweist, vorzugsweise in Form eines Zylinders oder Zapfens vorliegt; und/oder
• das Werkzeug (2000) die Spiegelkopfbaugruppe (200) in einer Knock-Forward-Position arretiert, um Zugang zu einem Kameraanschluss (705) und/oder der Kamera (700) zu erhalten, wenn die Basisabdeckungskappe (180), die untere Basisabdeckung (170) und die obere Basisabdeckung (190) vom Basisrahmen (110) demontiert worden sind; und/oder
• das Werkzeug (2000) mindestens eine der Klammer-, Schnapp- und/oder Rastverbindungen löst.

20. Verfahren nach Anspruch 18 oder 19, das die folgenden Schritte umfasst, wenn die Basisabdeckung mit dem Verfahren nach einem der Ansprüche 10 bis 13 montiert worden ist:
• Zugreifen auf die Bügelklammer (199) der oberen Basisabdeckung (190) durch einen Schlitz (611) im Türblatt (605) zum Lockern des Eingriffs in den Vorsprung (866) des Türdichtungssubstrats (804) und/oder
• Passieren durch das Ablaufloch (166) der unteren Basisabdeckung (170) zum Lockern des Eingriffs der Klammer (198) der oberen Basisabdeckung (190) in die Tasche (160) der unteren Basisabdeckung (170) und/oder
• Entfernen der oberen Basisabdeckung (190) durch Herausziehen ihrer Klammerhalterungserweiterungen (694, 695) aus den zwei Klammern (185, 186) der Basisabdeckungskappe (180) und/oder
• Demontieren der Basisabdeckungskappe (180) durch Lösen ihrer Klammer (184) aus dem Positionierungsvorsprung (127) des Basisrahmens (110), vorzugsweise durch Verwenden des Werkzeugs (2000), und ihrer Zapfenvorsprünge (150, 153) aus dem multifunktionalen Baugruppenvorsprung (171) der unteren Basisabdeckung (170), indem sie vorzugsweise derart aus der Position gedrückt werden, dass sich die Basisabdeckungskappe (180) drehen kann, und/oder
• Lösen der fünf Klammern (177-179) der unteren Basisabdeckung (170) von dem Basisrahmen (110) derart, dass die untere Basisabdeckung (170) entfernt werden kann.

21. Verfahren nach Anspruch 19 oder 20, das den folgenden Schritt umfasst:
Arretieren der Spiegelkopfbaugruppe (200) in der Knock-Forward-Position durch Einschieben des Werkzeugs (2000) in eine Aussparung oder ein Loch (111) des Basisrahmens (110), um vom Boden der Basisbaugruppe (100) auf einen mechanischen Anschlag (216) eines Gehäuserahmens (215) der Kopfbaugruppe (200) zuzugreifen;
wobei vorzugsweise alle Teile, mit denen das Werkzeug (2000) über Schnittstellen verbunden ist, aus Aluminium hergestellt sind.

22. Verfahren nach einem der Ansprüche 18 bis 21, das den folgenden Schritt umfasst:
die Blendlichtabschirmung (750') wird, vorzugsweise mit dem Werkzeug (2000), durch Lösen der Klammer-, Schnapp- und/oder Rastverbindungen demontiert,
wobei insbesondere das Demontieren der Blendlichtabschirmung (750') der erste Demontageschritt ist.

## Revendications

1. Couvercle de base d'un assemblage de base (100, 100', 100") d'un dispositif de rétroviseur extérieur (1, 1') à monter sur un véhicule (2) et pour supporter de manière mobile un assemblage de tête (200, 200'), comprenant trois parties de couvercle conçues pour envelopper de manière amovible un cadre de base (110, 110') en étant apposées par le biais de connexions à clips, à pression et/ou à loquet,
dans lequel
les trois parties de couvercle comprennent un capuchon de couvercle de base (180, 180', 180"), un couvercle de base inférieur (170, 170', 170") et un couvercle de base supérieur (190, 190', 190"),
le capuchon de couvercle de base (180, 180', 180"), le couvercle de base inférieur (170, 170', 170") et le couvercle de base supérieur (190, 190', 190") sont connectés par les connexions à pression, à clips et/ou à loquet les uns aux autres et au cadre de base (110, 110'), sans vis, et
l'assemblage du capuchon de couvercle de base (180, 180', 180"), du couvercle de base inférieur (170, 170', 170") et du couvercle de base supérieur (190, 190', 190") sur le cadre de base (110, 110') est sécurisé en s'engageant avec un moyen d'étanchéité (800).

2. Couvercle de base selon la revendication 1, dans lequel
• les trois parties de couvercle sont réalisées en plastique, et/ou
• les trois parties de couvercle isolent le cadre de base (110, 110') qui est réalisé en métal ; et/ou
• les trois parties de couvercle recouvrent un bras (116) du cadre de base (110, 110') depuis une portion d'apposition de porte (115, 115') jusqu'à une portion d'apposition de tête (117, 117', 117") du cadre de base (110, 110'), et/ou
• les trois parties de couvercle sont connectées par les connexions à clips, à pression et/ou à loquet, lesdites connections étant fournies entre les trois parties de couvercle, le moyen d'étanchéité (800) et le cadre de base (110) pour fournir l'assemblage de base.

3. Couvercle de base selon la revendication 2, dans lequel
• le couvercle de base inférieur (170, 170") est pourvu d'une ouverture (702, 702"') pour une caméra (700, 700"') apposée au cadre de base (110), notamment par le biais d'un berceau de caméra (704), et/ou d'un orifice d'évacuation (166),
et/ou
• le couvercle de base inférieur (170) est pourvu d'un ou de plusieurs premiers moyens d'apposition, notamment de cinq clips (175 - 179) et d'une saillie d'assemblage multifonctionnelle (171), pour l'apposition au cadre de base (110) ;
et/ou
• le couvercle de base inférieur (170) est pourvu d'un ou de plusieurs deuxièmes moyens d'apposition, comprenant notamment trois crochets (172, 173, 174), pour l'apposition au moyen d'étanchéité (800), notamment un substrat de joint de porte (804) du moyen d'étanchéité (800) ; et/ou
• le couvercle de base inférieur (170) a un bord pour s'engager avec le moyen d'étanchéité (800), notamment un joint d'étanchéité de porte (802) du moyen d'étanchéité (800) et/ou pour une étanchéité extérieure ; et/ou
• le couvercle de base inférieur (170) est pourvu d'un ou de plusieurs troisièmes moyens d'apposition pour l'apposition au capuchon de couvercle de base (180), comprenant notamment une saillie d'assemblage multifonctionnelle (171) et des ouvertures (161, 168), et/ou
• le couvercle de base inférieur (170) est pourvu d'un ou de plusieurs quatrièmes moyens d'apposition pour l'apposition au couvercle de base supérieur (190), comprenant notamment une poche (160) et des ouvertures (161, 162, 164, 165).

4. Couvercle de base selon la revendication 2 ou 3, dans lequel
• le capuchon de couvercle de base (180, 180', 180") est pourvu d'une ouverture (702', 702") pour une caméra (700, 700', 700") apposée au cadre de base (110, 110'), notamment par le biais d'un berceau de caméra (704') ; et/ou
• le capuchon de couvercle de base (180) est pourvu d'un ou de plusieurs cinquièmes moyens d'apposition pour l'apposition au couvercle de base inférieur (170), comprenant notamment des saillies semblables à des chevilles (150, 153) et une languette (152) ; et/ou
• le capuchon de couvercle de base (180) est pourvu d'un ou de plusieurs sixièmes moyens d'apposition pour l'apposition au couvercle de base supérieur (190), comprenant notamment des saillies semblables à des chevilles (153), une fente (151) et deux clips (185, 186), de préférence sous la forme de deux clips à ressort à lames adaptés pour reposer sur le cadre de base (110) à la racine et à l'extrémité, permettant à la portion centrale entre les deux de fléchir vers le bas ; et/ou
• le capuchon de couvercle de base (180) est pourvu d'un ou de plusieurs septièmes moyens d'apposition pour l'apposition au cadre de base (110), comprenant notamment au moins un clip (184).

5. Couvercle de base selon l'une quelconque des revendications 2 à 4, dans lequel
• le couvercle de base supérieur (190) est pourvu d'une ouverture pour une caméra apposée au cadre de base, notamment par le biais d'un berceau de caméra ; et/ou
• le couvercle de base supérieur (190) est pourvu d'un ou de plusieurs huitièmes moyens d'apposition pour l'apposition au couvercle de base inférieur (170), comprenant notamment des chevilles de positionnement (192 à 198, 691, 692) et/ou au moins un clip (198) ;
• le capuchon de couvercle de base (180) est pourvu d'un ou plusieurs neuvièmes moyens d'apposition pour l'apposition au capuchon de couvercle de base (180), comprenant notamment des extensions de rétention de clip (694, 695) et au moins une saillie d'alignement (696 - 698), et/ou
• le couvercle de base supérieur (190) est pourvu d'un ou plusieurs dixièmes moyens d'apposition, notamment une pince à cerceau (199), pour s'engager avec l'élément d'étanchéité (800), notamment une saillie (866) du substrat de joint de porte (804).

6. Couvercle de base selon l'une quelconque des revendications précédentes, comprenant en outre un écran anti-éblouissant (750') entourant une lentille (720') d'une caméra (700'), notamment la lentille (720') s'étendant à travers l'ouverture (702', 702") du capuchon de couvercle de base (180', 180") et fournissant une ouverture à travers laquelle la caméra (700') peut obtenir des images,
dans lequel de préférence l'écran anti-éblouissant (750') est configuré pour être apposé de manière amovible à au moins une des trois parties de couvercle et/ou un berceau de caméra (704') de la caméra (700') par le biais d'au moins une connexion à clips, à pression et/ou à loquet.

7. Couvercle de base selon la revendication 6, dans lequel
l'écran anti-éblouissant (750') est pourvu d'au moins un clip (750'a, 750'b),
dans lequel de préférence l'au moins un clip (750'a, 750'b) de l'écran anti-éblouissant (750') est configuré pour réaliser au moins une action parmi
• s'engager avec le capuchon de couvercle de base (180') ou au moins une extension ou patte (180'a) du capuchon de couvercle de base (180') et
• être supporté par le berceau de caméra (704') ou au moins une languette de rétention (704'a) du berceau de caméra (704').

8. Dispositif de rétroviseur extérieur (1, 1'), comprenant
un assemblage de base (100, 100', 100") avec un cadre de base (110, 110') à apposer à un véhicule (2),
un assemblage de tête (200, 200') pour supporter au moins un élément réfléchissant (250'), un élément d'affichage (260') et/ou une caméra, l'assemblage de tête (200, 200') étant apposé à l'assemblage de base (100, 100', 100") de manière mobile, et
un moyen d'étanchéité (800) adapté à être installé entre l'assemblage de base (100, 100', 100") et une porte (600) du véhicule (2),
dans lequel
le cadre de base (110, 110') est enveloppé avec un couvercle de base selon l'une quelconque des revendications précédentes.

9. Dispositif de rétroviseur extérieur selon la revendication 8, comprenant en outre
au moins une caméra (700, 700', 700", 700‴), de préférence positionnée dans une zone non-mobile de l'assemblage de tête mobile ou dans l'assemblage de base, notamment apposée au cadre de base (110, 110'), et/ou regardant à travers une ouverture (702, 702", 702"') fournie par l'une des trois parties de couvercle de base, et/ou
un berceau de caméra (704, 704') qui est configuré pour être apposé au cadre de base (110, 110'), notamment par un ajustement par friction et sans aucun élément d'apposition séparable, le berceau de caméra (704, 704') étant de préférence une unité en matière plastique pour isoler la caméra (700, 700', 700", 700‴) par rapport au cadre de base (110, 110') ; et/ou un moyen de retenue (301) entre le cadre de base (110) et le moyen d'étanchéité (800), le moyen de retenue (301) étant de préférence une unité en matière plastique pour étanchéifier et guider un système de sangles (400, 410).

10. Dispositif de rétroviseur extérieur selon la revendication 8 ou 9, comprenant en outre un assemblage d'articulation (210, 210') pour déplacer l'assemblage de tête (200, 200') par rapport à l'assemblage de base (100, 100', 100"), et/ou
au moins un système fonctionnel, comprenant
• un module lumineux, un module de clignotant, un module d'indicateur d'angles morts, ou une interface homme machine,
• un module Bluetooth,
• un module de capteur, un capteur de température, un capteur tactile ou un capteur de pollution, et
• un système de nettoyage pour nettoyer la lentille (720ʺʺ), comprenant notamment au moins un orifice ou une buse (760‴) pour le fluide, et/ou
une unité de commande (280'), adaptée notamment pour commander au moins un des éléments parmi l'élément d'affichage (260'), l'assemblage d'articulation (210') et le système fonctionnel.

11. Dispositif de rétroviseur extérieur selon l'une quelconque des revendications 8 à 10, dans lequel l'élément d'affichage (260') est configuré pour être au moins soit
• visible par l'intermédiaire de l'élément réfléchissant (250') lorsqu'il est activé, soit
• activé par au moins un chauffeur du véhicule (2), en fonction d'un signal de sortie du module de capteur, par le biais d'un système de commande de véhicule et/ou par le biais de l'unité de commande (280').

12. Véhicule (2) avec une porte (600) ayant un panneau de porte (605) et supportant une fenêtre (1000) ainsi qu'un panneau fixe (640) scellé par un joint de guidage de vitre (920), **caractérisé en ce qu'**il comprend le dispositif de rétroviseur extérieur (1, 1') selon l'une quelconque des revendications 8 à 11, dans lequel le panneau de porte (605) supporte également le dispositif de rétroviseur extérieur (1, 1').

13. Véhicule selon la revendication 12, dans lequel
le joint de guidage de vitre (920) est agencé à l'intérieur d'un canal (900) fourni par le cadre de base (110) avec le moyen de retenue (301) et le moyen d'étanchéité (800) ; et/ou
une lèvre (922) du joint de guidage de vitre (920) s'engage avec le panneau fixe (640) et le couvercle de base supérieur (190) ; et/ou
le joint de guidage de vitre (920) est au moins partiellement recouvert par une baguette de finition de seuil (940) de telle sorte que l'assemblage de base (100) s'étende à partir de la baguette de finition de seuil (940).

14. Procédé destiné à monter le couvercle de base selon l'une quelconque des revendications 1 à 7, comprenant les étapes suivantes
apposer le couvercle de base inférieur (170) au moyen d'étanchéité (800) et au cadre de base (110), dans lequel de préférence un bord du couvercle de base inférieur (170) est amené en engagement avec le joint d'étanchéité de porte (802) de telle sorte que le couvercle de base inférieur (170) puisse tourner jusqu'à ce qu'il soit connecté au cadre de base (110) et son ouverture (702) est agencée pour permettre à la caméra (700) de voir par le couvercle,
• notamment avec les crochets (172, 173, 174), le couvercle de base inférieur (170) étant tourné dans des poches de crochets (860, 862) et/ou entre des nervures (870, 872) fournies par le substrat de joint de porte (804).

15. Procédé selon la revendication 14, comprenant l'étape suivante
apposer le capuchon de couvercle de base (180) au couvercle de base inférieur (170),
dans lequel de préférence le capuchon de couvercle de base (180) est apposé au niveau d'une extrémité au couvercle de base inférieur (170) pour créer un point de rotation pour faire tourner le capuchon de couvercle de base (180) jusque dans sa position finale avec apposition également au niveau de son autre extrémité,
• notamment avec la languette (152) à l'extrémité du capuchon de couvercle de base (180), laquelle fait face à la portion d'apposition de porte (115) du cadre de base (110), qui est entrée dans l'ouverture (168) du couvercle de base inférieur (170) pour définir la direction d'apposition et se verrouiller derrière le couvercle de base inférieur (170) pour créer un point de rotation, et/ou
• notamment avec le capuchon de couvercle de base (180) qui est forcé à fléchir vers l'extérieur tout en étant tourné jusque dans sa finale, et/ou
• notamment avec la saillie semblable à une cheville (150) à l'extrémité du capuchon de couvercle de base (180), laquelle fait face à la portion d'apposition de tête (117) du cadre de base (110), qui est entrée dans une première fente dans la saillie d'assemblage multifonctionnelle (171) du couvercle de base inférieur (170) et une autre saillie semblable à une cheville (153) du capuchon de couvercle de base (180) qui est entrée dans une autre fente dans la saillie d'assemblage multifonctionnelle (171) du couvercle de base inférieur (170) et qui fléchit de nouveau dans l'ouverture (162) du couvercle de base inférieur (170) pour commander l'ajustement final du capuchon de couvercle de base (180).

16. Procédé selon l'une quelconque des revendications 14 ou 15, comprenant les étapes suivantes
apposer le couvercle de base supérieur (190) au capuchon de couvercle de base (180) et au couvercle de base inférieur (170),
dans lequel de préférence l'apposition du couvercle de base supérieur (190) est assistée par le capuchon de couvercle de base (180) qui est monté sur le cadre de base (110) en fournissant une rampe guidant un mouvement de rotation du couvercle de base supérieur (190)
• notamment avec le couvercle de base supérieur (190) qui est apposé au niveau d'une extrémité au couvercle de base inférieur (170) et au capuchon de couvercle de base (180) pour créer un point de rotation pour faire tourner le couvercle de base supérieur (190) jusque dans sa position finale avec apposition également au niveau de son autre extrémité, et/ou
• notamment avec les deux chevilles de positionnement (691, 692) à l'extrémité du couvercle de base supérieur (190), laquelle fait face à la portion d'apposition de tête (117) du cadre de base (110), qui sont ajustées dans deux fentes correspondantes, l'une étant fournie par l'ouverture (162) dans le couvercle de base inférieur (170) et l'autre par la fente (151) qui est formée dans la saillie (150) du capuchon de couvercle de base (180), et/ou
• notamment avec la saillie de positionnement la plus extérieure (691) pour tirer le capuchon de couvercle de base (180) jusque dans sa position finale et définir un axe de rotation ; et/ou
• notamment en faisant tourner le couvercle de base supérieur (190) jusqu'à ce que les quatre saillies de positionnement (192 à 195) positionnent le couvercle de base supérieur (190) sur le couvercle de base inférieur (170), et/ou
• notamment avec la rampe qui est fournie par les deux clips (184, 185) à proximité de l'extrémité du couvercle de base supérieur (190), laquelle fait face à la portion d'apposition de tête (117) du cadre de base (110), lesdits deux clips (184, 185) reposant sur le cadre de base (110) à leurs racines et à leurs extrémités, permettant aux portions centrales de fléchir vers le bas, et/ou
• notamment avec les saillies (696 à 698) pour aligner le couvercle de base supérieur (190) et amener les extensions de rétention de clip (694, 695) sur les clips correspondants (185, 186) du capuchon de couvercle de base (180), et/ou
• notamment avec le clip (198) à l'extrémité du couvercle de base supérieur (190), laquelle fait face à la portion d'apposition de porte (115) du cadre de base (110), qui est entré dans la poche (160) dans le couvercle de base inférieur (170), et/ou
• notamment avec la pince à cerceau (199) à l'extrémité du couvercle de base supérieur (190), laquelle fait face à la portion d'apposition de porte (115) du cadre de base (110), s'engageant avec la saillie (866) du substrat de joint de porte (804).

17. Procédé selon l'une quelconque des revendications 14 à 16, comprenant l'étape suivante
connecter l'écran anti-éblouissant (750') pour la caméra (700'), de préférence en poussant celui-ci entre le capuchon de couvercle de base (180') et le berceau (704') de ladite caméra (700'), notamment en poussant l'au moins un clip (750'a, 750'b) en engagement avec l'au moins une extension ou patte (180'a) du capuchon de couvercle de base (180') et l'au moins une languette de rétention (704'a) du berceau de caméra (704'), et/ou
notamment l'étape de connexion de l'écran anti-éblouissant (750') étant la dernière étape de montage du couvercle de base.

18. Procédé destiné à démonter le couvercle de base selon l'une quelconque des revendications 1 à 7, après le montage du couvercle de base avec un procédé selon l'une quelconque des revendications 14 à 17, dans lequel
le capuchon de couvercle de base (180), le couvercle de base inférieur (170) et le couvercle de base supérieur (190) sont démontés avec un seul outil (2000) en délogeant les connexions à pression, à clips et/ou à loquet et/ou avec le cadre de base (110) qui est monté sur le véhicule (2).

19. Procédé selon la revendication 18, dans lequel
• l'outil (2000) est une pièce métallique, de préférence réalisée en aluminium, et/ou
• l'outil (2000) a un diamètre maximal de 4 mm, de préférence est sous la forme d'un cylindre ou d'une broche ; et/ou
• l'outil (2000) verrouille l'assemblage de tête de miroir (200) dans une position de frappe vers l'avant pour pouvoir accéder à un connecteur de caméra (705) et/ou la caméra (700) lorsque le capuchon de couvercle de base (180), le couvercle de base inférieur (170) et le couvercle de base supérieur (190) ont été démontés du cadre de base (110) ; et/ou
• l'outil (2000) désengage au moins l'une des connexions à pression, à clips et/ou à loquet.

20. Procédé selon la revendication 18 ou 19, comprenant les étapes suivantes, lorsque le couvercle de base a été monté avec le procédé selon l'une quelconque des revendications 10 à 13,
• accéder à la pince à cerceau (199) du couvercle de base supérieur (190) par l'intermédiaire d'une fente (611) dans le panneau de porte (605) pour desserrer l'engagement avec la saillie (866) du substrat de joint de porte (804), et/ou
• passer à travers l'orifice d'évacuation (166) du couvercle de base inférieur (170) pour desserrer l'engagement du clip (198) du couvercle de base supérieur (190) avec la poche (160) du couvercle de base inférieur (170), et/ou
• enlever le couvercle de base supérieur (190) en tirant sur ses extensions de rétention de clip (694, 695) en dehors des deux clips (185, 186) du capuchon de couvercle de base (180), et/ou
• démonter le capuchon de couvercle de base (180) en désengageant son clip (184) de la saillie de positionnement (127) du cadre de base (110), de préférence en utilisant l'outil (2000), et ses saillies semblables à des chevilles (150, 153) de la saillie d'assemblage multifonctionnelle (171) du couvercle de base inférieur (170), de préférence en les poussant en dehors de leur position, de telle sorte que le capuchon de couvercle de base (180) puisse tourner, et/ou
• désengager les cinq clips (177 à 179) du couvercle de base inférieur (170) du cadre de base (110) de telle sorte que le couvercle de base inférieur (170) puisse être enlevé.

21. Procédé selon la revendication 19 ou 20, comprenant l'étape suivante
verrouiller l'assemblage de tête de miroir (200) dans la position de frappe vers l'avant en insérant l'outil (2000) dans un évidement ou trou (111) du cadre de base (110) pour accéder à une butée mécanique (216) d'un cadre de boîtier (215) de l'assemblage de tête (200) à partir du bas de l'assemblage de base (100) ; dans lequel de préférence toutes les parties avec lesquelles l'outil (2000) s'interface sont réalisées en aluminium.

22. Procédé selon l'une quelconque des revendications 18 à 21, comprenant l'étape suivante
l'écran anti-éblouissant (750') est démonté, de préférence avec l'outil (2000), en délogeant les connexions à pression, à clips et/ou à loquet,
avec notamment le démontage de l'écran anti-éblouissant (750') qui est la première étape de démontage.
